# EUROPÄISCHE PATENTSCHRIFT

(11) **EP 4 211 343 B1**
(45) Veröffentlichungstag und Bekanntmachung des Hinweises auf die Patenterteilung: **25.02.2026**
(21) Anmeldenummer: 21773752.7
(22) Anmeldetag: 08.09.2021
(51) Int. Cl.: F02K 9/40, F02K 9/48, F02K 9/52, F02K 9/97

(54) **SCHUBKAMMERVORRICHTUNG UND VERFAHREN ZUM BETREIBEN EINER SCHUBKAMMERVORRICHTUNG**
THRUST CHAMBER DEVICE AND METHOD FOR OPERATING A THRUST CHAMBER DEVICE
DISPOSITIF DE CHAMBRE DE POUSSÉE ET PROCÉDÉ POUR FAIRE FONCTIONNER UN DISPOSITIF DE CHAMBRE DE POUSSÉE

(30) Priorität: 08.09.2020 DE 102020123422
(43) Veröffentlichungstag der Anmeldung: 19.07.2023
(73) Patentinhaber: Deutsches Zentrum für Luft- und Raumfahrt e.V., 53227 Bonn (DE)
(72) Erfinder: ORTELT, Markus, 74223 Flein (DE)
(74) Vertreter: Hoeger, Stellrecht & Partner Patentanwälte mbB
(86) Internationale Anmeldenummer: PCT/EP2021/074678
(87) Internationale Veröffentlichungsnummer: WO 2022/053496

(56) Entgegenhaltungen:
- WO-A1-02/29233
- WO-A1-2018/167204
- GB-A- 2 196 394

## Beschreibung

Die vorliegende Erfindung betrifft eine Schubkammervorrichtung, umfassend eine Schubkammer mit einem Schubraum, welcher einen ersten Abschnitt, einen sich daran anschließenden zweiten Abschnitt und einen sich an den zweiten Abschnitt anschließenden dritten Abschnitt aufweist, wobei der Schubraum in allen drei Abschnitten von einer äußeren Düsenwandung mit einer äußeren Schubraumfläche begrenzt ist, welche äußere Schubraumfläche sich im ersten und zweiten Abschnitt zum dritten Abschnitt hin verjüngt und sich im dritten Abschnitt von dem zweiten Abschnitt weg erweitert, wobei eine engste Stelle am Übergang von dem zweiten Abschnitt zu dem dritten Abschnitt ausgebildet ist, wobei der erste Abschnitt von einer inneren Düsenwandung mit einer inneren Schubraumfläche begrenzt ist, welche sich zum zweiten Abschnitt hin verjüngt und wobei zwischen der inneren Schubraumfläche und der äußeren Schubraumfläche ein Ringbrennraum ausgebildet ist, welcher sich über den ersten Abschnitt erstreckt.

Ferner betrifft die vorliegende Erfindung ein Verfahren zum Betreiben einer Schubkammervorrichtung.

Des Weiteren betrifft die Erfindung ein Triebwerk, insbesondere für einen Flugkörper oder ein Fluggerät.

Außerdem betrifft die vorliegende Erfindung einen Flugkörper oder ein Fluggerät, umfassend einen ersten Treibstoffspeicher für mindestens eine erste Treibstoffkomponente, einen zweiten Treibstoffspeicher für mindestens eine zweite Treibstoffkomponente und ein Triebwerk.

Schubkammervorrichtungen der eingangs beschriebenen Art werden beispielsweise bei Triebwerken eingesetzt, um einen Schub, beispielsweise zum Antreiben eines Flugkörpers wie eine Rakete, insbesondere durch Verbrennung von Treibstoffkomponenten zu erzeugen. Bei einer Treibstoffkomponente kann es sich insbesondere um einen Brennstoff handeln. Beispielsweise können als Brennstoff flüssiger Wasserstoff (LH₂) und als weitere Treibstoffkomponente flüssiger Sauerstoff (LOX), der die Funktion eines Oxidationsmittels, des sogenannten Oxidators, übernimmt, eingesetzt werden.

Ein Beispiel für eine Schubkammervorrichtung der eingangs beschriebenen Art ist insbesondere aus der WO 2018/167204 A1 bekannt. Bei der bekannten Schubkammervorrichtung ist im Bereich der äußeren Düsenwandung eine Mehrzahl erster Treibstoffeinlässe ausgebildet, um eine erste Treibstoffkomponente durch diese hindurch in die Schubkammer einzuleiten. Dabei wird die äußere Düsenwandung gleichzeitig gekühlt, und zwar durch die erste Treibstoffkomponente, die sich dabei erwärmt. Bei einer solchen Transpirationskühlung ist es jedoch erforderlich, mehr Treibstoff in den Schubraum zu injizieren als für die Kühlung der äußeren Düsenwandung erforderlich ist. Im Ergebnis wird die erste Treibstoffkomponente dann im Schubraum beziehungsweise in der Brennkammer nicht vollständig umgesetzt.

Aus der WO 02/29233 A1 ist eine ringförmige Brennkammer für ein Raketentriebwerk bekannt, welches mit einem Flüssigtreibstoff betrieben wird. In der GB 2 196 394 A ist ein Raketentriebwerk beschrieben.

Es ist daher eine Aufgabe der vorliegenden Erfindung, eine Schubkammervorrichtung, ein Verfahren, ein Triebwerk und einen Flugkörper beziehungsweise ein Fluggerät der eingangs beschriebenen Art so zu verbessern, dass die Schubkammervorrichtung effizienter betreibbar ist.

Diese Aufgabe wird bei einer Schubkammervorrichtung der eingangs beschriebenen Art erfindungsgemäß dadurch gelöst, dass die Schubkammervorrichtung eine regenerative Kühleinrichtung umfasst zum Kühlen der inneren Düsenwandung und der äußeren Düsenwandung mit einem Kühlmittel, um die bei der Kühlung der beiden Düsenwandungen vom Kühlmittel aufgenommene Wärme beziehungsweise Enthalpie vollständig zu nutzen zum Antreiben einer Antriebseinrichtung, mit der Fördereinrichtungen für im Schubraum zu verbrennende Treibstoffkomponenten angetrieben werden können.

Die innere Düsenwandung und die äußere Düsenwandung mit dem Kühlmittel regenerativ zu kühlen hat insbesondere den Vorteil, dass die bei der Kühlung der beiden Düsenwandungen aufgenommene Wärme beziehungsweise Enthalpie vollständig genutzt werden kann, um beispielsweise eine Turbine anzutreiben, mit der Fördereinrichtungen, insbesondere Turbopumpen, für im Schubraum zu verbrennende Treibstoffkomponenten angetrieben werden können. Ferner ist es durch die vorgeschlagene regenerative Kühlung nicht erforderlich, mehr von der ersten Treibstoffkomponente in den Schubraum zu injizieren, als für eine optimale Verbrennung erforderlich ist. Zudem ergeben sich für eine regenerative Kühleinrichtung in Verbindung mit dem besonders geformten Schubraum der Schubkammer weitere Vorteile. Insbesondere kann so eine Länge der Schubkammer im Vergleich zu einer klassischen Kontur eines Schubraumdesigns mit zylindrischer Brennkammerwandung signifikant verringert werden. Eine Optimierung in dieser Hinsicht kann insbesondere durch die Form der inneren und äußeren Düsenwandung erreicht werden, beispielsweise indem beide Düsenwandungen als Rotationshyperboloide geformt werden. Längeneinsparungen und damit signifikante Einsparungen am Gewicht der Schubkammervorrichtung von bis zu 50% bieten insbesondere im Raumfahrtbereich große Vorteile. Insbesondere kann so bei gleicher Leistung der Schubkammer mehr Nutzlast transportiert werden. Durch die kürzere Bauweise, also einer gegenüber herkömmlichen Brennkammerdesigns reduzierten Baulänge, kann zudem ein übermäßiger Druckverlust durch Enthalpieaufnahme durch das Kühlmittel beim Durchströmen der Düsenwandung vermieden werden. Ferner ist es beispielsweise auch möglich, das Kühlmittel zur Kühlung auf die innere Düsenwandung und die äußere Düsenwandung aufzuteilen, also beide Düsenwandungen parallel zu kühlen, oder eine solche Kühlung der Düsenwandung seriell vorzunehmen. So können insbesondere unterschiedliche Kühlmodi genutzt werden, die optimal an unterschiedliche Betriebsmodi der Schubkammervorrichtung angepasst sind. Insbesondere eine serielle Kühlung von innerer und äußerer Düsenwandung ist bei einer Transpirationskühlung überhaupt nicht möglich.

Vorteilhaft ist es, wenn regenerative Kühleinrichtung eine Mehrzahl innerer Kühlmittelkanäle in der inneren Düsenwandung und eine Mehrzahl äußerer Kühlmittelkanäle in der äußeren Düsenwandung umfasst und wenn die Mehrzahl innerer Kühlmittelkanäle und die Mehrzahl äußerer Kühlmittelkanäle ausgebildet sind zum Durchströmen mit dem Kühlmittel. Auf diese Weise lassen sich die Düsenwandungen effizient kühlen. Die Kühlmittelkanäle können sich im Wesentlichen parallel zu einer Längs- oder Symmetrieachse der Schubkammer erstrecken oder können bezogen auf die Längs- oder Symmetrieachse beispielsweise auch spiralförmig in den Düsenwandungen ausgebildet sein. Eine Wärmeaufnahme im Kühlmittel und insbesondere ein Druckverlust infolge der Wärmeaufnahme bei der Kühlung kann so abhängig von einer Größe der Schubkammervorrichtung optimiert werden.

Kühlkanäle lassen sich dann in den Düsenwandungen der Schubkammervorrichtung insbesondere auf einfache Weise ausbilden, wenn die innere Düsenwandung und/oder die äußere Düsenwandung aus einem keramischen und/ oder metallischen Werkstoff ausgebildet sind.

Vorzugsweise weisen die innere Schubraumfläche und/oder die äußere Schubraumfläche mindestens teilweise die Form eines Rotationshyperboloids oder eine kontinuierlich konkave Längsschnittlinie auf. Insbesondere können die innere Schubraumfläche und/oder die äußere Schubraumfläche eine Form aufwiesen, die der eines Rotationshyperboloid ähnlich ist, insofern sie eine kontinuierlich konkave Längsschnittlinie aufweisen. Beispielsweise können so regenerativ gekühlte Doppelschalen-Hyperboloid-Schubräume beziehungsweise Brennkammern ausgebildet werden. Insbesondere ist es so auf einfache Weise möglich einen konstanten Querschnitt des Schubraums vorzugeben, also beispielsweise kann der Schubraum als ein Ringraum zwischen der äußeren Schubraumfläche und der inneren Schubraumfläche im ersten Abschnitt ausgebildet werden. Ferner ist es möglich, die unterschiedlichen Abschnitte des Schubraums von Schubraumflächen zu begrenzen, die unterschiedlich gekrümmte Rotationshyperboloide definieren.

Um eine effiziente Kühlung und Führung der Verbrennungsprodukte im Schubraum zu erreichen, ist es vorteilhaft, wenn die innere Schubraumfläche in Richtung auf die äußere Schubraumfläche hin weisend konvex gekrümmt oder im Wesentlichen konvex gekrümmt ausgebildet ist. Im Wesentlichen konvex gekrümmt bedeutet insbesondere, dass eine Einhüllende der inneren Schubraumfläche konvex gekrümmt ist. Die innere Schubraumfläche kann dann auch kurze Bereiche mit konkaver Krümmung aufweisen, beispielsweise um eine Querschnittsfläche des Ringbrennraums zu verändern, insbesondere zu vergrößern, um Treibstoffmischbereiche zu bilden.

Vorteilhaft ist es, wenn die die äußere Schubraumfläche in Richtung auf die innere Schubraumfläche hin weisend konvex gekrümmt oder im Wesentlichen konvex gekrümmt ausgebildet ist. Im Vergleich zu einer klassischen Kontur einer äußeren Düsenwandung einer Schubkammer mit einem im Wesentlichen zylindrischen Brennraum lassen sich so typische Grenzschichtturbulenzen vermeiden, die auch Görtler-Wirbel bezeichnet werden. Derartige Wirbel bilden sich insbesondere im Bereich der engsten Stelle der Schubkammer, die durch die äußere Düsenwandung definiert wird, aus.

Gemäß einer weiteren bevorzugten Ausführungsform der Erfindung kann vorgesehen sein, dass die Schubkammer eine Längsachse definiert und dass die Schubkammer, insbesondere der erste Abschnitt und/oder der zweite Abschnitt und/oder der dritte Abschnitt, rotationssymmetrisch bezogen auf die Längsachse ausgebildet sind. Dies vereinfacht insbesondere den Aufbau und die Konstruktion der Schubkammervorrichtung.

Vorteilhaft ist es, wenn die äußere Schubraumfläche und/oder die innere Schubraumfläche rotationssymmetrisch bezogen auf die Längsachse ausgebildet sind. So kann beispielsweise eine Konstruktion der Schubkammervorrichtung vereinfacht werden.

Vorzugsweise weist der Ringbrennraum eine konstante oder im Wesentlichen konstante Querschnittsfläche auf. Zwar können sich Durchmesser der inneren und äußeren Schubraumflächen längs der Erstreckung des Schubraums parallel zur Längsachse ändern, doch lässt sich auf diese Weise ein quasi-zylindrischer Ringbrennraum ausbilden, welcher ohne Änderung der Krümmungsrichtung der Schubraumflächen, und zwar aufgrund des geometrischen Zusammenwirkens von rein konvexer äußerer und rein konvexer innerer Schubraumfläche, in einen konvergenten Schubkammerabschnitt zum Zweck des Schalldurchgangs übergeht. Insbesondere kann durch die sich verjüngende äußere Düsenwandung eine erhöhte Erwärmung derselben verhindert werden, indem insbesondere ein Kühlmittelstrom vergrößert wird, beispielsweise durch Vergrößern der Kühlmittelkanäle im Bereich eines kleinsten Durchmessers der äußeren Schubraumfläche. Die konstante Querschnittsfläche ermöglicht es insbesondere, eine quasi-zylindrische Brennkammerzone ohne Querschnittsverengung auszubilden, also eine Brennkammerzone analog zum Standard-Design, nämlich dem zylindrischen Teil einer Raketenbrennkammer.

Um in der Schubkammer eine gezielte, insbesondere stöchiometrische, chemische Reaktion der Treibstoffkomponenten zu ermöglichen, ist es günstig, wenn die Schubkammervorrichtung eine Mehrzahl erster Treibstoffeinlässe für eine erste Treibstoffkomponente und eine Mehrzahl zweiter Treibstoffeinlässe für eine zweite Treibstoffkomponente umfasst. Eine Mehrzahl von Treibstoffeinlässen für die unterschiedlichen Treibstoffkomponenten ermöglicht insbesondere eine optimale Durchmischung derselben bereits beim Eintritt oder nahe des Eintritts derselben in den Schubraum.

Vorteilhaft ist es, wenn erste Abschnitt des Schubraums an einem vom zweiten Abschnitt weg weisenden Ende von einer Injektionswandung begrenzt ist, welche die innere Düsenwandung und die äußere Düsenwandung miteinander verbindet, und wenn die Mehrzahl erster Treibstoffeinlässe und die Mehrzahl zweiter Treibstoffeinlässe in der Injektionswandung angeordnet oder ausgebildet sind. Insbesondere können alle Treibstoffeinlässe in der Schubkammervorrichtung in der Injektionswandung angeordnet oder ausgebildet sein. Dies ermöglicht es insbesondere, die Treibstoffe in einer vom Ringbrennraum vorgegebenen Richtung in Richtung auf den dritten Abschnitt in den Schubraum einzuleiten.

Vorzugsweise ist die Injektionswandung ringförmig oder rotationssymmetrisch oder Hyperboloid-ähnlich ausgebildet zum Verschließen des ringförmigen Ringbrennraums. Dies ermöglicht es insbesondere, den Schubraum proximalseitig, also an seinem vom dritten Abschnitt abgewandten Ende, auf einfache Weise zu verschließen.

Um die Treibstoffkomponenten in definierter Weise in den Schubraum injizieren zu können, ist es vorteilhaft, wenn die Schubkammervorrichtung einen Einspritzkopf umfasst und wenn der Einspritzkopf die Injektionswandung umfasst. So kann der Einspritzkopf mit der Injektionswandung insbesondere den Ringbrennraum verschließen. Der Einspritzkopf kann insbesondere mit einem, zwei oder mehreren Verteilerräumen ausgebildet sein, um die unterschiedlichen Treibstoffkomponenten in gezielter Weise und gleichzeitig durch die Mehrzahl von Treibstoffeinlässen in den Schubraum einbringen zu können.

Vorteilhaft ist es, wenn die die Mehrzahl erster Treibstoffeinlässe und die Mehrzahl zweiter Treibstoffeinlässe in Form von Kanälen ausgebildet sind, welche in den Ringbrennraum weisende Kanalmündungen aufweisen. So können die Treibstoffkomponenten in definierter und einfacher Weise in den Ringbrennraum eingeleitet werden, und zwar insbesondere bereits mit einer Strömungskomponente in einer Richtung parallel oder im Wesentlichen parallel zu den den Ringbrennraum begrenzenden Schubraumflächen.

Günstig ist es, wenn die Mehrzahl erster Treibstoffeinlässe erste Treibstoffeinlasslängsachsen definieren und wenn die ersten Treibstoffeinlasslängsachsen in den ersten Abschnitt hinein in einer Richtung parallel oder im Wesentlichen parallel zu Tangenten an die innere Schubraumfläche und/oder die äußere Schubraumfläche weisen. Die erste Treibstoffkomponente kann so in der durch die Treibstoffeinlasslängsachsen vorgegebenen Richtung in den Ringbrennraum eingeleitet werden und den Schubraum durchströmen.

Vorzugsweise umfasst die Schubkammereinrichtung eine erste Injektionseinrichtung zum Injizieren der mindestens einen ersten Treibstoffkomponente in den Schubraum durch die Mehrzahl erster Treibstoffeinlässe. Mit der ersten Injektionseinrichtung kann die mindestens eine erste Treibstoffkomponente in definierter Weise, insbesondere mit einem vordefinierten Volumenstrom, in den Schubraum eingeleitet werden.

Günstig ist es, wenn die Schubkammervorrichtung einen ersten Treibstoffspeicher für eine erste Treibstoffkomponente umfasst und wenn die erste Injektionseinrichtung eine erste Fördereinrichtung zum Fördern der mindestens einen ersten Treibstoffkomponente aus dem ersten Treibstoffspeicher durch die Mehrzahl erster Treibstoffeinlässe in den Schubraum umfasst. Auf diese Weise kann die erste Treibstoffkomponente beispielsweise direkt durch die ersten Treibstoffeinlässe vom ersten Treibstoffspeicher in den Schubraum injiziert werden oder vor dem Einleiten in den Schubraum die innere und/oder äußere Düsenwandung kühlen, wenn die erste Treibstoffkomponente vor dem Einleiten in den Schubraum beispielsweise durch innere und/oder äußere Kühlmittelkanäle in den Düsenwandungen geleitet wird. Die erste Fördereinrichtung kann insbesondere in Form einer Pumpeinrichtung, beispielsweise in Form einer Turbopumpe, ausgebildet sein.

Vorteilhaft ist es, wenn die erste Fördereinrichtung eine Saugseite und eine Druckseite aufweist, wenn die Saugseite fluidwirksam mit dem ersten Treibstoffspeicher verbunden ist und wenn die Druckseite fluidwirksam mit den äußeren Kühlmittelkanälen und/oder den inneren Kühlmittelkanälen verbunden ist. Diese Ausgestaltung ermöglicht es insbesondere, die erste Treibstoffkomponente mit der ersten Fördereinrichtung durch die inneren und/oder äußeren Kühlmittelkanäle zu fördern.

Gemäß einer weiteren bevorzugten Ausführungsform der Erfindung kann vorgesehen sein, dass die Mehrzahl zweiter Treibstoffeinlässe zweite Treibstoffeinlasslängsachsen definieren und dass die zweiten Treibstoffeinlasslängsachsen in den ersten Abschnitt hinein in einer Richtung parallel oder im Wesentlichen parallel zu Tangenten an die innere Schubraumfläche und/oder die äußere Schubraumfläche weisen. So kann die mindestens eine zweite Treibstoffkomponente mit hoher Effizienz und geringen Reibungsverlusten in den Schubraum injiziert werden. Insbesondere ist es so möglich, die erste Treibstoffkomponente und die mindestens eine zweite Treibstoffkomponente parallel zueinander in den Schubraum einzuleiten, und zwar bereits mit einer optimierten Strömungsrichtung, die durch den Schubraum vorgegeben ist.

Günstig ist es, wenn die Schubkammervorrichtung eine zweite Injektionseinrichtung zum Injizieren der mindestens einen zweiten Treibstoffkomponente in den Schubraum durch die Mehrzahl zweiter Treibstoffeinlässe umfasst. Mit der zweiten Injektionseinrichtung kann die mindestens eine zweite Treibstoffkomponente in definierter Weise, beispielsweise mit einem vordefinierten Volumenstrom, in den Schubraum eingeleitet werden. Insbesondere können die zweite Injektionseinrichtung und die erste Injektionseinrichtung aufeinander abgestimmt betrieben werden, um im Schubraum stets ein optimales Treibstoffgemisch, insbesondere ein stöchiometrisches Gemisch, für die Verbrennung einzustellen.

Vorteilhaft ist es, wenn die Schubkammervorrichtung mindestens einen zweiten Treibstoffspeicher für mindestens eine zweite Treibstoffkomponente umfasst und wenn die zweite Injektionseinrichtung eine zweite Fördereinrichtung zum Fördern der mindestens einen zweiten Treibstoffkomponente aus dem zweiten Treibstoffspeicher durch die Mehrzahl zweiter Treibstoffeinlässe in den Schubraum umfasst. Auf diese Weise kann die zweite Treibstoffkomponente einfach und in definierter Weise, beispielsweise mit einem vorgegebenen Volumenstrom, in den Schubraum eingeleitet werden. Die zweite Treibstoffkomponente kann insbesondere ein flüssiges Oxidationsmittel sein. Die zweite Fördereinrichtung kann insbesondere in Form einer Pumpeinrichtung, beispielsweise in Form einer Turbopumpe, ausgebildet sein.

Günstigerweise bildet die erste Treibstoffkomponente das Kühlmittel. So lässt sich die Schubkammervorrichtung auf einfache und definierte Weise kühlen. Insbesondere kann so eine aufwendige Konstruktion der Düsenwandungen vermieden werden, da beispielsweise nur Kühlmittelkanäle ausgebildet werden müssen für eine der Treibstoffkomponenten zum Betreiben der Schubkammervorrichtung. So kann insbesondere eine unerwünschte Reaktion der Treibstoffkomponenten miteinander vor Eintritt derselben in den Schubraum einfach und sicher vermieden werden.

Eine optimale Kühlung der Düsenwandungen kann insbesondere erreicht werden, wenn die erste Treibstoffkomponente ein flüssiger Brennstoff ist. Insbesondere kann es sich dabei um flüssigen Wasserstoff oder flüssiges Methan oder verflüssigtes Erdgas handeln. Durch Wärmeaufnahme der ersten Treibstoffkomponente beim Durchströmen der Düsenwandungen erhöht sich ein Druck derselben. Durch diese Drucksteigerung kann insbesondere eine Antriebseinrichtung für die Fördereinrichtungen angetrieben werden, beispielsweise eine Turbine, die mit den Fördereinrichtungen antriebswirksam gekoppelt ist.

Günstigerweise ist die zweite Treibstoffkomponente ein flüssiges Oxidationsmittel. Beispielsweise kann dieses flüssiger Sauerstoff sein. Große Gasvolumina lassen sich insbesondere in flüssiger Form in kompakter Weise speichern, beispielsweise in einem Drucktank.

Günstig ist es, wenn die Schubkammervorrichtung eine Antriebseinrichtung zum Antreiben der ersten Fördereinrichtung und/oder der zweiten Fördereinrichtung umfasst. Es können insbesondere zwei Antriebseinrichtungen vorgesehen sein, die jeweils einer der beiden Fördereinrichtungen zugeordnet sind. Insbesondere kann eine Antriebseinrichtung antriebswirksam mit beiden Fördereinrichtungen gekoppelt sein, beispielsweise über eine gemeinsame Antriebswelle. Die beschriebenen Ausgestaltungen ermöglichen es insbesondere, eine der beiden Treibstoffkomponenten nicht nur für die Verbrennung und damit zur Erzeugung eines Schubs mit der Schubkammervorrichtung zu nutzen, sondern auch um die Treibstoffkomponenten vom jeweiligen Treibstoffspeicher direkt oder indirekt, also insbesondere über Kühlmittelkanäle, in die Schubkammer zu fördern.

Auf einfache Weise lässt sich die Antriebseinrichtung ausbilden in Form einer Turbine. Beispielsweise kann sie in Form einer Gasturbine ausgebildet sein.

Ein einfacher und kompakter Aufbau der Schubkammervorrichtung kann insbesondere dadurch erreicht werden, dass die Antriebseinrichtung einen Fluideinlass und einen Fluidauslass umfasst und dass der Fluidauslass mit den ersten Treibstoffeinlässen fluidwirksam verbunden ist.

Gemäß einer weiteren bevorzugten Ausführungsform der Erfindung kann vorgesehen sein, dass die äußeren Kühlmittelkanäle äußere Kühlmittelkanaleinlässe und äußere Kühlmittelkanalauslässe aufweisen und dass die inneren Kühlmittelkanäle innere Kühlmittelkanaleinlässe und innere Kühlmittelkanalauslässe aufweisen. Diese Ausgestaltung ermöglicht es insbesondere, die Düsenwandungen in gewünschter Weise mit Kühlmittelkanälen auszustatten. Die jeweiligen Kühlmittelkanaleinlässe und Kühlmittelkanalauslässe können wahlweise entweder nahe einem vom dritten Abschnitt weg weisenden Ende des ersten Abschnitts oder von diesem Ende beabstandet angeordnet oder ausgebildet sein. So kann beispielsweise Kühlmittel durch äußere Kühlmittelkanäle in einer Richtung vom dritten Abschnitt zum ersten Abschnitt hin geleitet werden und vom Ende des ersten Abschnitts, das dem dritten Abschnitt abgewandt ist, durch innere Kühlmittelkanäle bis zum Ende des ersten Abschnitts, welcher in Richtung auf den zweiten Abschnitt hin weist. Alternativ kann ein Kühlmittelstrom auch in umgekehrter Richtung vorgegeben werden.

Vorteilhaft ist es, wenn die Druckseite der ersten Fördereinrichtung mit den äußeren Kühlmittelkanaleinlässen fluidwirksam verbunden ist, wenn die äußeren Kühlmittelkanalauslässe mit den inneren Kühlmittelkanaleinlässen fluidwirksam verbunden sind und wenn die inneren Kühlmittelkanalauslässe fluidwirksam mit dem Fluideinlass der Antriebseinrichtung verbunden sind. Eine solche Ausgestaltung ermöglicht insbesondere eine serielle Kühlung der äußeren Düsenwandung und der inneren Düsenwandung. Dies bedeutet insbesondere, dass das Kühlmittel zunächst die äußere Düsenwandung durchströmt, dann die innere Düsenwandung und dann der Antriebseinrichtung zugeleitet wird. Einen Kühlmittelstrom in dieser Weise vorzusehen hat insbesondere beim Starten oder Anlassen der Schubkammervorrichtung Vorteile, da sich das Kühlmittel aufgrund der längeren Strömungsstrecke insgesamt besser erwärmen und dadurch die Antriebseinrichtung mit hoher Effizienz antreiben kann.

Ferner kann es günstig sein, wenn Druckseite der ersten Fördereinrichtung mit den äußeren Kühlmittelkanaleinlässen und den inneren Kühlmittelkanaleinlässen fluidwirksam verbunden ist und wenn die äußeren Kühlmittelkanalauslässe und die inneren Kühlmittelkanalauslässe fluidwirksam mit dem Fluideinlass der Antriebseinrichtung verbunden sind. Eine derartige Ausgestaltung ermöglicht insbesondere quasi einen parallelen Kühlmittelstrom des Kühlmittels einerseits durch die äußeren Kühlmittelkanäle und andererseits durch die inneren Kühlmittelkanäle. Das Kühlmittel nimmt dabei weniger Wärme auf als bei einer oben beschriebenen seriellen Kühlung der beiden Düsenwandungen. Allerdings ist bei einer parallelen Kühlung der Düsenwandungen aufgrund einer kürzeren Strömungsstrecke des Kühlmittels durch die jeweilige Düsenwandung eine Reibung verringert. Eine parallele Kühlung der Düsenwandungen ist insbesondere nach dem Anlaufen der Schubkammervorrichtung, also insbesondere in einem Normal- oder Lastbetrieb der Schubkammervorrichtung, vorteilhaft.

Ferner kann es vorteilhaft sein, wenn die Druckseite der ersten Fördereinrichtung mit den inneren Kühlmittelkanaleinlässen fluidwirksam verbunden ist, wenn die inneren Kühlmittelkanalauslässe mit den äußeren Kühlmittelkanaleinlässen fluidwirksam verbunden sind und wenn die äußeren Kühlmittelkanalauslässe fluidwirksam mit dem Fluideinlass der Antriebseinrichtung verbunden sind. Auf diese Weise kann insbesondere eine serielle Kühlung der Düsenwandungen realisiert werden, und zwar derart, dass mit dem Kühlmittel aus dem ersten Treibstoffspeicher zunächst die innere Düsenwandung gekühlt und dann das so vorerwärmte Kühlmittel zum Kühlen der äußeren Düsenwandung genutzt und dabei weiter erwärmt wird. Auf diese Weise kann also auch eine serielle Kühlung der Düsenwandungen realisiert werden.

Vorteilhaft ist es, wenn die Schubkammervorrichtung eine Kühlmittelstromumschalteinrichtung umfasst zum wahlweisen Umschalten eines Kühlmittelstroms parallel oder seriell durch die inneren Kühlmittelkanäle und die äußeren Kühlmittelkanäle. Eine solche Kühlmittelstromumschalteinrichtung ermöglicht es insbesondere, wahlweise die Düsenwandungen parallel oder seriell zu kühlen, wie dies oben eingehend erläutert wurde. Insbesondere kann die Kühlmittelstromumschalteinrichtung derart ausgebildet sein, dass auch vorgegeben werden kann, ob die serielle Kühlung zunächst der inneren Düsenwandung oder der äußeren Düsenwandung erfolgen soll.

Auf einfache Weise lässt sich die Kühlmittelstromumschalteinrichtung ausbilden, wenn sie eine Ventileinrichtung umfasst.

Die eingangs gestellte Aufgabe wird ferner bei einem Triebwerk der eingangs beschriebenen Art erfindungsgemäß dadurch gelöst, dass es eine der oben beschriebenen Schubkammervorrichtungen umfasst.

Ein derart weitergebildetes Triebwerk weist die bereits oben im Zusammenhang mit bevorzugten Ausführungsformen von Schubkammervorrichtungen beschriebenen Vorteile auf.

Die eingangs genannte Aufgabe wird ferner bei einem Flugkörper oder einem Fluggerät der eingangs beschriebenen Art erfindungsgemäß dadurch gelöst, dass sie ein erfindungsgemäßes Triebwerk umfassen.

Durch die verbesserte Kühlung der Düsenwandungen der Schubkammervorrichtung in Verbindung mit der kompakten Bauform der Schubkammervorrichtung, können kürzere und somit bei gleicher Systemleistung wesentlich leichtere Triebwerke ausgebildet werden. Diese ermöglichen es, mit der gleichen Treibstoffmenge größere Nutzlasten zu bewegen.

Die eingangs gestellte Aufgabe wird ferner bei einem Verfahren der eingangs beschriebenen Art erfindungsgemäß dadurch gelöst, dass die innere Düsenwandung und die äußere Düsenwandung mit einem Kühlmittel regenerativ gekühlt werden, um die bei der Kühlung der beiden Düsenwandungen vom Kühlmittel aufgenommene Wärme beziehungsweise Enthalpie vollständig zu nutzen zum Antreiben einer Antriebseinrichtung, mit der eine oder mehrere Fördereinrichtungen für im Schubraum zu verbrennende Treibstoffkomponenten angetrieben werden können.

Wie bereits oben eingehend beschrieben kann so eine optimale Kühlung der Schubkammervorrichtung, ohne die erste Treibstoffkomponente im Übermaß in den Schubraum zu injizieren, erreicht werden. So lassen sich Massenstromverluste der ersten Treibstoffkomponente minimieren und insgesamt eine Schubkammervorrichtung effizienter betreiben.

Günstigerweise wird als Kühlmittel die erste Treibstoffkomponente verwendet. So kann auf das Mitführen eines ausschließlich Kühlzwecken dienenden Kühlmittels verzichtet werden. Die erste Treibstoffkomponente kann dann vor einer Reaktion mit einer weiteren Treibstoffkomponente zunächst die Düsenwandungen kühlen und so quasi eine Doppelfunktion erfüllen.

Günstig ist es, wenn das Kühlmittel parallel durch die äußere Düsenwandung und die innere Düsenwandung geleitet wird. Insbesondere ist dies bei einem Normal- oder Lastbetrieb der Schubkammervorrichtung wie oben beschrieben vorteilhaft. Parallel durch die Düsenwandungen leitend bedeutet insbesondere, einen Kühlmittelstrom aufzuteilen, sodass ein Teil desselben durch die äußere Düsenwandung und ein anderer Teil desselben durch die innere Düsenwandung geleitet wird. Diese Vorgehensweise ist insbesondere vorteilhaft, wenn sich das Triebwerk in einem stabilen Betriebsmodus befindet, also insbesondere bei einem Normal- oder Lastbetrieb. So können Reibungsverluste beim Durchströmen der Düsenwandungen durch das Kühlmittel minimiert werden.

Alternativ kann es vorteilhaft sein, wenn das Kühlmittel erst durch die innere Düsenwandung und dann durch die äußere Düsenwandung geleitet wird oder wenn das Kühlmittel erst durch die äußere Düsenwandung und dann durch die innere Düsenwandung geleitet wird. Auf diese Weise kann eine sogenannte serielle regenerative Kühlung der Düsenwandungen erreicht werden. Ein Kühlmittelstrom wird bei dieser Vorgehensweise insgesamt zunächst durch eine der beiden Düsenwandungen geleitet und daran anschließend durch die andere Düsenwandung. Ein solcher Kühlmodus ist insbesondere beim Anlassen oder Starten der Schubkammervorrichtung vorteilhaft, da sich das Kühlmittel aufgrund einer längeren Strömungsstrecke durch die Düsenwandungen stärker erwärmen kann. Die im Kühlmittel aufgenommene Energie kann dann insbesondere genutzt werden, um eine Antriebseinrichtung für Fördereinrichtungen der Treibstoffe zu nutzen. Dieser beschriebene Kühlmodus ist insbesondere beim Starten oder Anlassen der Schubkammervorrichtung vorteilhaft.

Vorzugsweise wird ein Kühlmodus beim Ändern eines Betriebsmodus der Schubkammervorrichtung geändert. Wie bereits beschrieben kann so beispielsweise beim Starten der Schubkammervorrichtung eine serielle Kühlung der Düsenwände erfolgen. Beim Erreichen eines Lastmodus der Schubkammervorrichtung kann dann beispielsweise wie beschrieben auf eine parallele Kühlung der Düsenwandungen umgeschaltet werden.

Vorteilhaft ist es, wenn in einem Startmodus der Schubkammervorrichtung ein serieller Kühlmodus durchgeführt wird und wenn in einem Lastmodus der Schubkammervorrichtungen ein paralleler Kühlmodus durchgeführt wird. Parallel und seriell sind oben bereits eingehend beschrieben. Sie definieren das Durchströmen der Düsenwandungen entweder nacheinander, also seriell, oder parallel, also zum einen Teil durch die innere Düsenwandung und zum anderen Teil durch die äußere Düsenwandung. Diese Vorgehensweise ermöglicht insbesondere einen optimierten Betrieb der Schubkammervorrichtung, da die Kühlung der Düsenwandungen optimal auf den jeweiligen Betriebsmodus der Schubkammervorrichtung abgestimmt werden kann.

Günstig ist es, wenn das Kühlmittel vor oder nach dem Durchströmen der inneren Düsenwandung und der äußeren Düsenwandung die Antriebseinrichtung durchströmt. Eine Enthalpieaufnahme des Kühlmittels durch Wärmeaufnahme aus den Düsenwandungen kann dann insbesondere genutzt werden, um die Antriebseinrichtung anzutreiben, welche zum Antreiben einer oder mehrerer Fördereinrichtungen für die benötigten Treibstoffkomponenten vorgesehen ist.

Vorzugsweise wird das Kühlmittel nach dem Durchströmen der inneren Düsenwandung und/oder der äußeren Düsenwandung durch die ersten Treibstoffeinlässe in die Schubkammer injiziert. So kann das Kühlmittel, also insbesondere die erste Treibstoffkomponente, nicht nur zum Kühlen der Schubkammervorrichtung genutzt werden, sondern auch um mit dieser einen Schub zu erzeugen.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung einer Schubraumkontur mit zwei Hyperboloiden zur Definition der inneren und äußeren Düsenwandungen;
- Figur 2:: eine schematische Darstellung eines Ausführungsbeispiels einer Schubkammervorrichtung mit serieller regenerativer Kühlung der äußeren Düsenwandung und der inneren Düsenwandung;
- Figur 3:: eine schematische Darstellung eines weiteren Ausführungsbeispiels einer Schubkammervorrichtung mit paralleler regenerativer Kühlung der inneren Düsenwandung und der äußeren Düsenwandung;
- Figur 4:: eine schematische Darstellung eines weiteren Ausführungsbeispiels einer Schubkammervorrichtung mit paralleler Kühlung der inneren Düsenwandung und der äußeren Düsenwandung;
- Figur 5:: eine schematische Darstellung eines weiteren Ausführungsbeispiels einer Schubkammervorrichtung mit serieller Kühlung der inneren Düsenwandung und der äußeren Düsenwandung;
- Figur 6:: eine schematische Darstellung eines Ausführungsbeispiels eines Einspritzkopfes einer Schubkammervorrichtung;
- Figur 7:: eine schematische Darstellung einer Kühlmittelstromumschalteinrichtung;
- Figur 8:: eine schematische Darstellung eines Triebwerks; und
- Figur 9:: eine schematische Darstellung eines Flugkörpers beziehungsweise eines Fluggeräts.

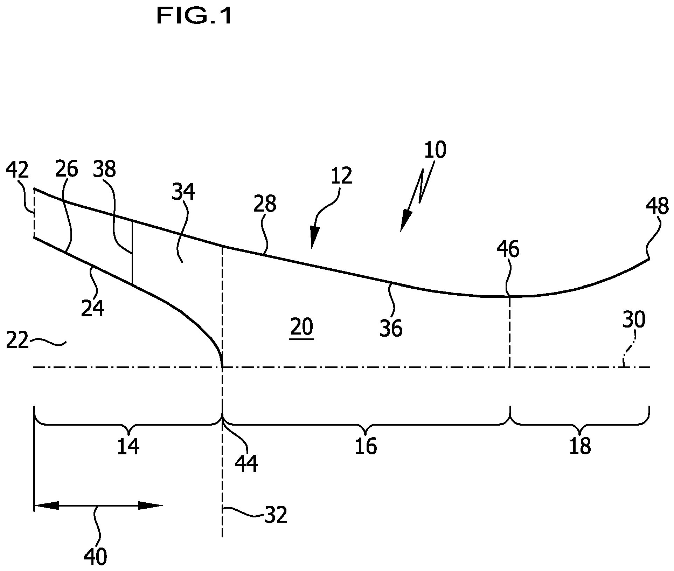

Ein erstes Ausführungsbeispiel einer Schubkammervorrichtung 10 ist schematisch in Figur 1 dargestellt. Die Schubkammervorrichtung 10 umfasst eine Schubkammer 12 mit einem ersten Abschnitt 14, einem zweiten Abschnitt 16 und einen dritten Abschnitt 18, welche einen Schubraum 20 der Schubkammer 10 in entsprechende Abschnitte 14, 16 und 18 aufteilen.

Der erste Abschnitt 14 wird definiert durch einen in den Schubraum 20 eingesetzten Einschubkörper 22, welcher eine innere Düsenwandung 24 mit einer inneren Schubraumfläche 26 des Schubraums 20 definiert.

Der Schubraum 20 ist außen von einer äußeren Düsenwandung 28 begrenzt, die bezogen auf eine Längsachse 30 rotationssymmetrisch ausgebildet ist, und zwar in Form eines einschaligen Rotationshyperboloids.

Die innere Schubraumfläche 26 weist die Form eines zweischaligen Rotationshyperboloids auf. Eine Tangente 32 im Übergang zwischen dem ersten Abschnitt 14 und dem zweiten Abschnitt 16 an den Einschubkörper 22 verläuft senkrecht zur Längsachse 30.

Der erste Abschnitt 32 definiert einen Ringbrennraum 34 als Teil des Schubraums 20.

Die äußere Düsenwandung 28 definiert eine den Schubraum 20 begrenzende äußere Schubraumfläche 36.

Die Schubraumflächen 26 und 36 sind bei einem Ausführungsbeispiel so gewählt, dass eine freie Querschnittsfläche 38 in Abhängigkeit eines Abstands 40 von einem ersten Ende 42 des ersten Abschnitts 14 konstant ist. Das erste Ende 42 begrenzt den ersten Abschnitt 14 vom zweiten Abschnitt 16 weg weisend.

Ausgehend vom ersten Ende 42 nimmt ein Außendurchmesser der durch den Ringbrennraum 34 definierten Ringfläche in Richtung auf den zweiten Abschnitt 16 hin ab, ebenso ein Durchmesser einer inneren Begrenzung dieser Ringfläche durch die innere Schubraumfläche 26. Im Übergang 54 zwischen dem ersten Abschnitt 14 und dem zweiten Abschnitt 16 geht die Ringfläche dann krümmungsfrei in eine Kreisfläche über, deren Querschnitt sich zur engsten Stelle 46 des Schubraums 20 hin weiter verjüngt.

Die engste Stelle 46 wird durch einen minimalen Durchmesser der äußeren Düsenwandung 28 definiert. Durch die engste Stelle 46 hindurch werden Verbrennungsgase zu einem Düsenaustritt 48 hin divergent beschleunigt. Der dritte Abschnitt 18, welcher sich ausgehend von der engsten Stelle 46 zum Düsenaustritt 48 hin erstreckt, wird auch als Überschallbereich bezeichnet.

Durch die kontinuierliche Krümmung der äußeren Düsenwandung 28 lassen sich Nachteile eines klassischen Schubkammerprofils mit zylindrischem Brennraum und sich daran anschließender Lavalle-Düse zum Düsenaustritt hin praktisch vollständig vermeiden. Beim klassischen Profil treten üblicherweise Grenzschichtturbulenzen im Bereich der äußeren Düsenwandung auf, wo diese die Krümmungsrichtung wechselt. Im Gegensatz hierzu ist bei dem in Figur 1 dargestellten Ausführungsbeispiel die äußere Düsenwandung 28 kontinuierlich gekrümmt, und zwar in Richtung auf die Längsachse 30 hin weisend konvex.

Die innere Düsenwandung 24 weist eine vom Einschubkörper 22 weg weisend kontinuierlich konvex gekrümmte innere Schubraumfläche 26 auf.

Durch den wie beschrieben bei der in Figur 1 dargestellten Schubkammer 12 konstanten Querschnitt des Ringbrennraums 34 wird ein quasi-zylindrischer Ringbrennraum 34 ausgebildet, jedoch mit dem Vorteil, dass sich die äußere Schubraumfläche 36 ausgehend vom ersten Ende 42 kontinuierlich verjüngt, sodass es im Bereich der engsten Stelle 46 weder zu Ablösungen noch zu Verwirbelungen kommen kann.

Durch entsprechende Wahl einer Form der Schubraumflächen 26 und 36 kann die Querschnittsfläche 38 wie beschrieben konstant sein oder alternativ in Richtung auf den Übergang 44 zu- oder abnehmen.

Der zweite Abschnitt 16 erstreckt sich vom Übergang 44 bis zur engsten Stelle 46 und wird ausschließlich durch die äußere Schubraumfläche 36 begrenzt.

Der erste Abschnitt 14 bildet bei dem in Figur 1 dargestellten Ausführungsbeispiel einen quasi-zylindrischen Bereich. Der zweite Abschnitt 16 bildet einen konvergenten Bereich des Schubraums 20 und der dritte Abschnitt 18 bildet den divergenten Überschallbereich der Schubkammer 12.

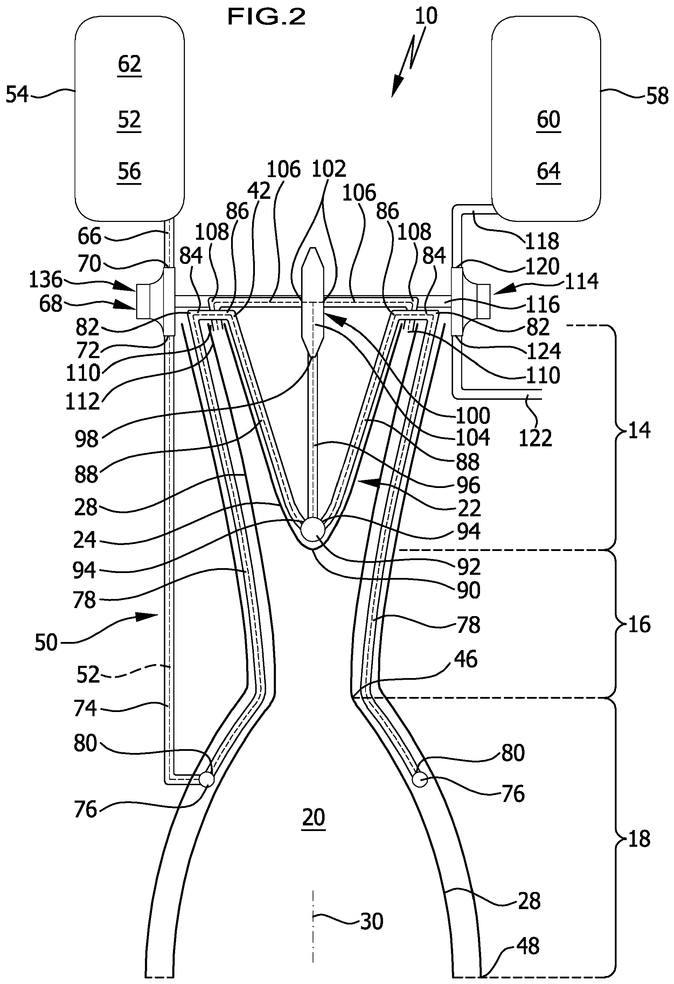

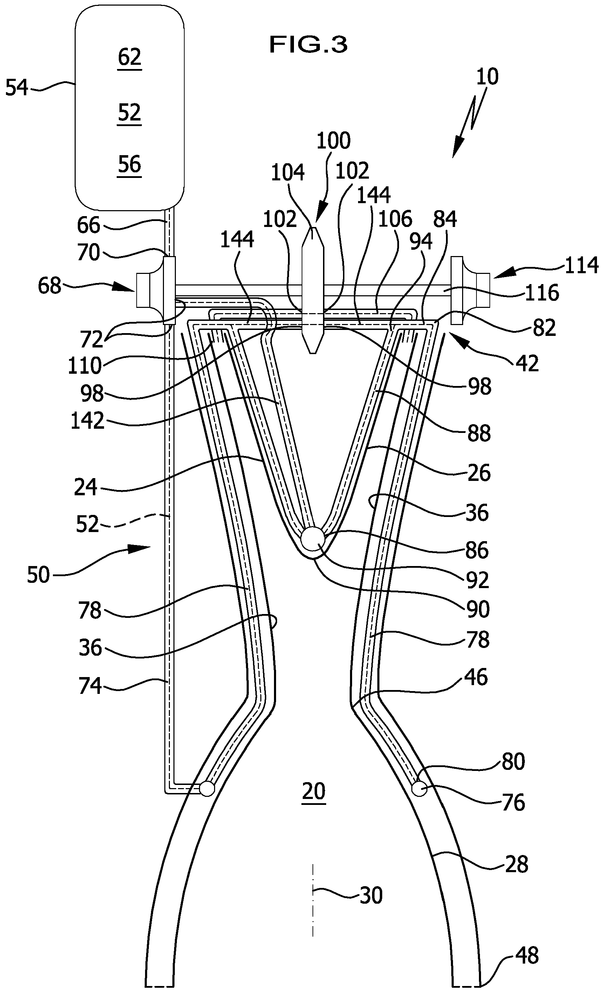

Ein weiteres Ausführungsbeispiel einer insgesamt mit dem Bezugszeichen 10 bezeichneten Schubkammervorrichtung ist schematisch in Figur 2 dargestellt. Sowohl in Figur 2 als auch in den weiteren Figuren 3 bis 9 sind zum leichteren Verständnis für identische oder ähnliche Komponenten der Schubkammervorrichtung 10, die in Verbindung mit Figur 1 beschrieben wurde, dieselben Bezugszeichen verwendet.

Die Schubkammervorrichtung 10 umfasst eine regenerative Kühleinrichtung 50 zum Kühlen der inneren Düsenwandung 24 und der äußeren Düsenwandung 28 mit einem Kühlmittel 52.

Die Schubkammervorrichtung 10 umfasst einen ersten Treibstoffspeicher 54 für eine erste Treibstoffkomponente 56 und einen zweiten Treibstoffspeicher 58 für eine zweite Treibstoffkomponente 60.

Bei dem beschriebenen Ausführungsbeispiel wird als erste Treibstoffkomponente 56 ein flüssiger Brennstoff 62 eingesetzt. Als zweite Treibstoffkomponente 60 wird ein Oxidator 64 beziehungsweise ein Oxidationsmittel eingesetzt. Beide Treibstoffkomponenten 56 und 60 sind flüssig und tiefkalt in den Treibstoffspeichern 54 beziehungsweise 58 gelagert.

Bei dem in Figur 2 schematisch dargestellten Ausführungsbeispiel der Schubkammervorrichtung 10 bildet die erste Treibstoffkomponente 56 das Kühlmittel 52.

Der erste Treibstoffspeicher 54 ist über eine Verbindungsleitung 66 fluidwirksam mit einer ersten Fördereinrichtung 68 verbunden, und zwar mit einer Saugseite 70 derselben. Eine Druckseite 72 der ersten Fördereinrichtung 68 ist über eine weitere Verbindungsleitung 74 fluidwirksam mit einem Ringverteiler 76 verbunden, welcher die äußere Düsenwandung 28 im Bereich des dritten Abschnitts 18 ringförmig umgibt.

Vom Ringverteiler 76 erstrecken sich in der äußeren Düsenwandung 28 eine Mehrzahl äußerer Kühlmittelkanäle 78, die mit ihren äußeren Kühlmittelkanaleinlässen 80 fluidwirksam mit dem Ringverteiler 76 verbunden sind, bis zum ersten Ende 42 der Schubkammervorrichtung 10.

Äußere Kühlmittelkanalauslässe 82 der äußeren Kühlmittelkanäle 78 sind über Verbindungsleitungen 84 mit inneren Kühlmittelkanaleinlässen 86 innerer Kühlmittelkanäle 88 fluidwirksam verbunden.

Die inneren Kühlmittelkanäle 88, von denen eine Mehrzahl vorgesehen ist, erstrecken sich in der inneren Düsenwandung 24 bis nahe an ein distales Ende 90 des Einschubkörpers 22, also bis nahe an den zweiten Abschnitt 16 heran. Innere Kühlmittelkanalauslässe 94 der inneren Kühlmittelkanäle 88 sind über einen Sammler 92 fluidwirksam miteinander verbunden.

Der Sammler 92 ist über eine weitere Verbindungsleitung 96 mit einem Fluideinlass 98 einer Antriebseinrichtung 100 fluidwirksam verbunden.

Ein Fluidauslass 102 der Antriebseinrichtung 100, die in Form einer Turbine 104 ausgebildet ist, ist über eine Verbindungsleitung 106 mit einem Verteilerraum 108 fluidwirksam verbunden. Vom Verteilerraum 108 erstreckt sich eine Mehrzahl erster Treibstoffeinlässe 110 durch eine Injektionswandung 112 in den ersten Abschnitt 114 des Schubraums 20 hinein.

In der beschriebenen Weise kann die erste Treibstoffkomponente 56 aus dem ersten Treibstoffspeicher 54 mittels der ersten Fördereinrichtung 68 durch die Kühlmittelkanäle 78 und 80 zur Antriebseinrichtung 100 gefördert werden. Die erste Treibstoffkomponente 56 wird beim Durchströmen der äußeren Düsenwandung 28 und der inneren Düsenwandung 24 erwärmt, dehnt sich aus und treibt die Turbine 104 an, die antriebswirksam mit der ersten Fördereinrichtung 68 und einer zweiten Fördereinrichtung 114 verbunden ist. Dies ist in Figur 2 schematisch in Form einer Antriebswelle 116 dargestellt.

Die erste Treibstoffkomponente 56 dient also nicht nur als Treibstoff, sondern auch als Kühlmittel 52. In der beschriebenen Weise ist eine serielle regenerative Kühlung der Düsenwandungen 28 und 24 realisiert, und zwar zuerst eine Kühlung der äußeren Düsenwandung 28 und daran anschließend eine Kühlung der inneren Düsenwandung 24 mit dem dann bereits etwas erwärmten Kühlmittel 52.

Der vorstehend beschriebene serielle Kühlmodus der Kühleinrichtung 50 ist insbesondere beim Starten der Schubkammervorrichtung 10 vorteilhaft. Das Kühlmittel 52 wird über einen längeren Weg erwärmt und kann so eine größere Wärmemenge aufnehmen, die zum Betreiben der Antriebseinrichtung 104 vorteilhaft ist.

Der zweite Treibstoffspeicher 58 ist über eine Verbindungsleitung 118 mit der zweiten Fördereinrichtung 114 fluidwirksam verbunden, und zwar mit deren Saugseite 120. Über eine weitere Verbindungsleitung 122 ist eine Druckseite 124 der zweiten Fördereinrichtung 114 fluidwirksam mit einem Verteilerraum 126 eines Einspritzkopfs 128 verbunden. Der Verteilerraum 126 für die zweite Treibstoffkomponente 60 ist über eine Mehrzahl zweiter Treibstoffeinlässe 130 fluidwirksam mit dem ersten Abschnitt 14 des Schubraums 20 verbunden, sodass die zweite Treibstoffkomponente 60 ebenfalls durch die Injektionswandung 112 in den Ringbrennraum 34 injiziert werden kann.

Die Fördereinrichtungen 68 und 114 sind in Form von Pumpeinrichtungen ausgebildet, und zwar in Form von Turbopumpen.

Die innere Düsenwandung 24 und die äußere Düsenwandung 28 sind bei einem Ausführungsbeispiel aus einem keramischen Werkstoff ausgebildet.

Bei einem anderen Ausführungsbeispiel einer Schubkammervorrichtung 10 sind die innere Düsenwandung 24 und die äußere Düsenwandung 28 aus einem metallischen Werkstoff ausgebildet.

Bei einem weiteren Ausführungsbeispiel der Schubkammervorrichtung 10 sind die innere Düsenwandung 24 und die äußere Düsenwandung 28 aus einem keramischen Werkstoff und aus einem metallischen Werkstoff ausgebildet.

Die innere Düsenwandung 24 weist sowohl bei dem in Figur 2 dargestellten Ausführungsbeispiel der Schubkammervorrichtung 10 als auch bei den in den Figuren 3 bis 5 dargestellten Ausführungsbeispielen die Form eines Rotationshyperboloids auf. Dies gilt entsprechend auch für die innere Schubraumfläche 26 und die äußere Schubraumfläche 36.

Die innere Schubraumfläche 26 ist bei allen Ausführungsbeispielen der Schubkammervorrichtung 10 auf die äußere Schubraumfläche 36 hin weisend konvex gekrümmt oder im Wesentlichen konvex gekrümmt ausgebildet.

Ferner ist die äußere Schubraumfläche 36 bei allen beschriebenen Ausführungsbeispielen von Schubkammervorrichtungen 10 in Richtung auf die innere Schubraumfläche 26 hin weisend konvex gekrümmt oder im Wesentlichen konvex gekrümmt ausgebildet.

Weiterhin sind bei allen Ausführungsbeispielen von Schubkammervorrichtungen 10 die Schubkammern 12 rotationssymmetrisch bezogen auf ihre Längsachse 30 ausgebildet. Dies gilt entsprechend auch für die Abschnitte 14, 16 und 18.

Ferner ist bei allen Ausführungsbeispielen von Schubkammervorrichtungen 10 die äußere Schubraumfläche 36 und die innere Schubraumfläche 26 rotationssymmetrisch bezogen auf die Längsachse 30 ausgebildet.

Die Injektionswandung 112 begrenzt den Schubraum 20 am ersten Ende 42 des ersten Abschnitts 14. Die Injektionswandung 112 verbindet die innere Düsenwandung 24 und die äußere Düsenwandung 28 miteinander. Wie bereits erläutert sind die Mehrzahl erster Treibstoffeinlässe 110 und die Mehrzahl zweiter Treibstoffeinlässe 130 in der Injektionswandung 112 angeordnet beziehungsweise ausgebildet beziehungsweise durchsetzen diese.

Die ringförmige Injektionswandung 112 verschließt den ringförmigen Ringbrennraum 34 am ersten Ende 42.

Der Einspritzkopf 128 der Schubkammervorrichtung 10 umfasst die Injektionswandung 112.

Die Mehrzahl erster Treibstoffeinlässe 110 und die Mehrzahl zweiter Treibstoffeinlässe 130 sind in Form von Kanälen ausgebildet, welche in den Ringbrennraum 34 weisende Kanalmündungen 132 aufweisen.

Die Mehrzahl erster Treibstoffeinlässe 110 definiert erste Treibstoffeinlasslängsachsen 134, welche in den ersten Abschnitt 14 hinein in einer Richtung parallel beziehungsweise im Wesentlichen parallel zu Tangenten an die innere Schubraumfläche 26 beziehungsweise die äußere Schubraumfläche 36 weisen.

Ferner umfasst die Schubkammervorrichtung 10 eine erste Injektionseinrichtung 136 zum Injizieren der ersten Treibstoffkomponente 56 in den Schubraum 20 durch die Mehrzahl erster Treibstoffeinlässe 110. Die erste Injektionseinrichtung 136 umfasst die erste Fördereinrichtung 68.

Die Mehrzahl zweiter Treibstoffeinlässe 130 definiert zweite Treibstoffeinlasslängsachsen 138, welche in den ersten Abschnitt 14 hinein in eine Richtung parallel oder im Wesentlichen parallel zu Tangenten an die innere Schubraumfläche 26 beziehungsweise die äußere Schubraumfläche 36 weisen.

Die Schubkammervorrichtung 10 umfasst ferner eine zweite Injektionseinrichtung 140 zum Injizieren der zweiten Treibstoffkomponente 60 in den Schubraum 20 durch die Mehrzahl zweiter Treibstoffeinlässe 130. Ferner umfasst die zweite Injektionseinrichtung 140 die zweite Fördereinrichtung 114.

In Figur 3 ist schematisch ein weiteres Ausführungsbeispiel einer insgesamt mit dem Bezugszeichen 10 bezeichneten Schubkammervorrichtung schematisch dargestellt.

Bei diesem Ausführungsbeispiel ist eine parallele regenerative Kühlung der Düsenwandungen 24 und 28 mit ihrer regenerativen Kühleinrichtung 50 durchführbar.

Wie beim Ausführungsbeispiel der Figur 2 ist die erste Fördereinrichtung 68 druckseitig über die Verbindungsleitung 74 mit dem Ringverteiler 76 fluidwirksam verbunden. Äußere Kühlmittelkanaleinlässe 80 der äußeren Kühlmittelkanäle 78 sind fluidwirksam mit dem Ringverteiler 76 verbunden und erstrecken sich durch die äußere Düsenwandung 28 bis zum ersten Ende 42.

Die Druckseite 72 ist über eine Verbindungsleitung 142 mit dem Sammler 92 fluidwirksam verbunden. Innere Kühlmittelkanaleinlässe 86 der inneren Kühlmittelkanäle 88 sind fluidwirksam mit dem Sammler 92 verbunden. Die inneren Kühlmittelkanäle 88 erstrecken sich in der inneren Düsenwandung 24 ebenfalls zum ersten Ende 42 hin. Äußere Kühlmittelkanalauslässe 82 sind über die Verbindungsleitung 84 mit inneren Kühlmittelkanaleinlässen 94 fluidwirksam verbunden. Die inneren Kühlmittelkanalauslässe 94 sind über Verbindungsleitungen 144 fluidwirksam mit dem Fluideinlass 98 der Antriebseinrichtung 100 verbunden. Weiterhin verbindet die Verbindungsleitung 106 den Fluidauslass 102 fluidwirksam mit dem Verteilerraum 108.

Die in Figur 3 schematisch dargestellte und oben beschriebene regenerative Kühleinrichtung 50 ermöglicht es, das Kühlmittel 52 mit der ersten Fördereinrichtung 68 parallel, also teilweise durch die äußeren Kühlmittelkanäle 78 und gleichzeitig teilweise durch die inneren Kühlmittelkanäle 88 zu fördern. Ein solcher paralleler Kühlmodus zum Betreiben der Kühleinrichtung 50 ist insbesondere bei einem stationären Modus oder Lastmodus der Schubkammervorrichtung vorteilhaft.

Im Lastmodus der Schubkammervorrichtung 10 sind die Düsenwandungen 24 und 28 hinreichend erwärmt, so dass das Kühlmittel 52 bereits beim Durchströmen nur der inneren Düsenwandung 24 oder nur der äußeren Düsenwandung 28 hinreichend erwärmt wird, um die Antriebseinrichtung 100 in gewünschter Weise anzutreiben.

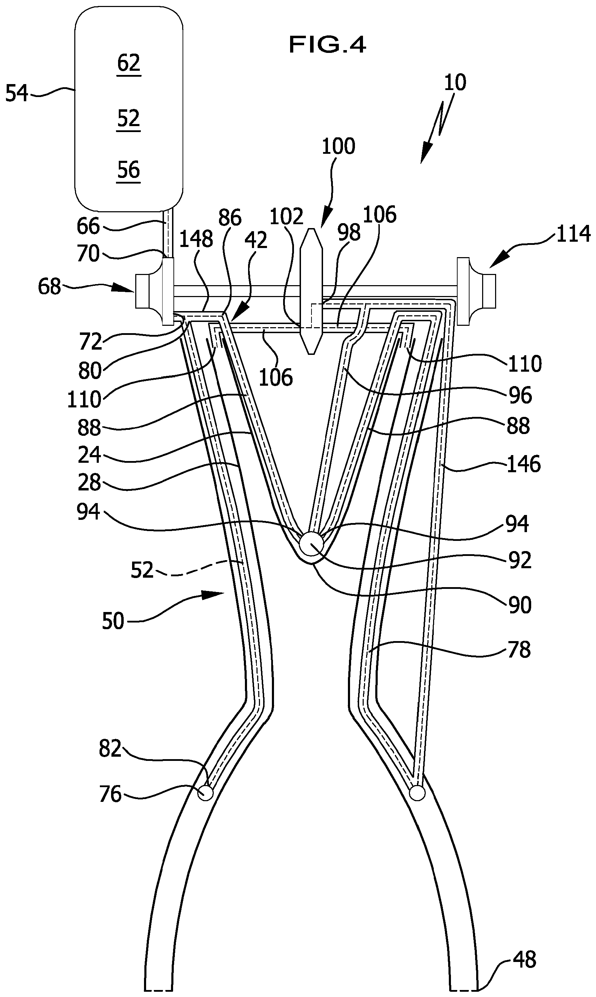

Ein weiteres Ausführungsbeispiel einer Schubkammervorrichtung 10 ist schematisch in Figur 4 dargestellt. Es ist in seinem Funktionsprinzip der regenerativen Kühleinrichtung 50 des in Figur 3 dargestellten Ausführungsbeispiels ähnlich.

Bei dem in Figur 4 dargestellten Ausführungsbeispiel sind äußere Kühlmittelkanaleinlässe 80 mit der Druckseite 72 der ersten Fördereinrichtung 68 fluidwirksam verbunden und leiten das Kühlmittel 52 vom ersten Ende 42 zum Ringverteiler 76, welcher mit äußeren Kühlmittelkanalauslässen 82 fluidwirksam verbunden ist. Über eine Verbindungsleitung 146 ist der Ringverteiler 76, welcher bei diesem Ausführungsbeispiel die Funktion eines Sammlers hat, mit dem Fluideinlass 98 der Antriebseinrichtung 100 fluidwirksam verbunden. Weiterhin sind innere Kühlmittelkanaleinlässe 86 über eine Verbindungsleitung 148 mit der Druckseite 72 fluidwirksam verbunden.

Innere Kühlmittelkanalauslässe 94 sind fluidwirksam mit dem Sammler 92 verbunden.

Der Sammler 92 ist wiederum über die Verbindungsleitung 96 fluidwirksam mit dem Fluideinlass 98 entweder direkt verbunden oder mündet vor diesem in die Verbindungsleitung 146 ein.

Der Fluidauslass 102 der Antriebseinrichtung 100 ist über Verbindungsleitungen 106 mit dem Verteilerraum 108 verbunden.

Bei dem Ausführungsbeispiel der Figur 4 ist ebenfalls eine parallele Kühlung der Düsenwandungen 24 und 28 möglich. Das Kühlmittel 52 wird von der Fördereinrichtung 68 auf die inneren und äußeren Kühlmittelkanäle 88 beziehungsweise 78 verteilt und strömt somit entweder durch den einen oder durch den anderen Kühlmittelkanal 78 beziehungsweise 88. Im Unterschied zum Ausführungsbeispiel der Figur 3 erfolgt die Kühlung bei dem Ausführungsbeispiel der Figur 4 ausgehend vom ersten Ende 42 in distaler Richtung zum dritten Abschnitt 18 hin. Beim Ausführungsbeispiel der Figur 3 wird das Kühlmittel 52 in Richtung auf das erste Ende 42 hin durch die Düsenwandungen 24 und 28 zum Kühlen derselben gefördert.

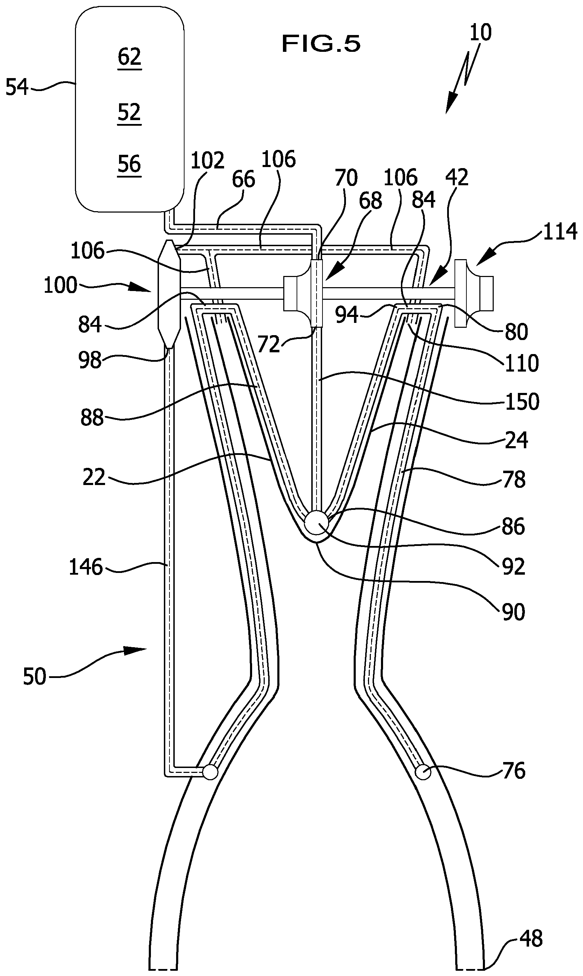

In Figur 5 ist ein weiteres Ausführungsbeispiel einer Schubkammervorrichtung 10 schematisch dargestellt. Es ist in seiner Funktionsweise dem Ausführungsbeispiel der Figur 2 ähnlich und ermöglicht einen seriellen Kühlmodus der regenerativen Kühleinrichtung 50.

Die Druckseite 72 ist bei diesem Ausführungsbeispiel über eine Verbindungsleitung 150 fluidwirksam mit dem Sammler 92 im Bereich des distalen Endes 90 des Einschubkörpers 22 fluidwirksam verbunden. Innere Kühlmittelkanaleinlässe 86 sind direkt fluidwirksam mit dem Sammler 92 verbunden und verlaufen wiederum durch die innere Düsenwandung 24 in Richtung auf das erste Ende 42 hin.

Verbindungsleitungen 84 im Bereich des ersten Endes 42 verbinden innere Kühlmittelkanalauslässe 94 fluidwirksam mit äußeren Kühlmittelkanaleinlässen 80 im Bereich des ersten Endes 42. Die äußeren Kühlmittelkanäle 78 erstrecken sich durch die äußere Düsenwandung 28 bis hin zum Ringverteiler 76, welcher bei diesem Ausführungsbeispiel wiederum die Funktion eines Sammlers übernimmt.

über eine Verbindungsleitung 146 ist der Ringverteiler 76 fluidwirksam mit dem Fluideinlass 98 der Antriebseinrichtung 100 verbunden. Der Fluidauslass 102 der Antriebseinrichtung 100 ist wiederum über Verbindungsleitungen 106 mit dem Verteilerraum 108 fluidwirksam verbunden.

Mit dem Ausführungsbeispiel der Figur 5 kann eine serielle Kühlung der Düsenwandungen 24 und 28 realisiert werden. Anders als beim Ausführungsbeispiel der Figur 2, wo das Kühlmittel 52 zunächst die äußere Düsenwandung 28 und daran anschließend die innere Düsenwandung 24 durchströmt, erfolgt die Kühlung beim Ausführungsbeispiel der Figur 5 gerade umgekehrt. Das Kühlmittel 52 wird zunächst durch die innere Düsenwandung 24 geleitet und daran anschließend durch die äußere Düsenwandung 28.

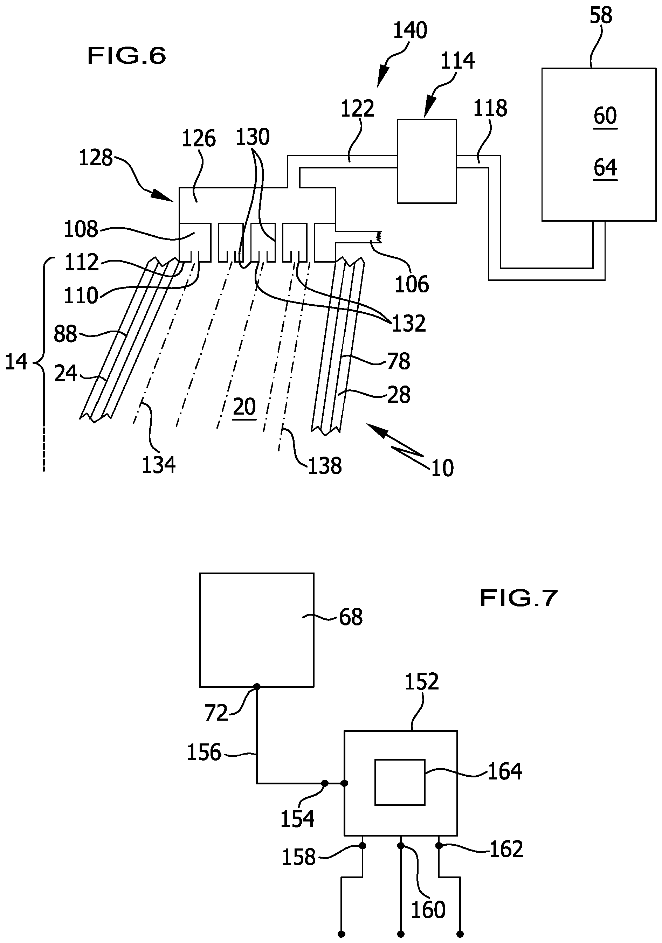

In Figur 7 ist schematisch eine Kühlmittelstromumschalteinrichtung 152 dargestellt. Die oben beschriebenen Ausführungsbeispiele der Schubkammervorrichtungen 10 können optional eine solche Kühlmittelstromumschalteinrichtung 152 umfassen. Falls diese vorgesehen ist, ist ein Eingang 154 derselben über eine Verbindungsleitung 156 fluidwirksam mit der Druckseite 72 der ersten Fördereinrichtung 68 verbunden.

Die Kühlmittelstromumschalteinrichtung 152 umfasst bei dem in Figur 7 dargestellten Ausführungsbeispiel drei Ausgänge 158, 160 und 162, die mit den inneren und äußeren Kühlmittelkanälen 88 und 78 derart verbunden werden, dass mit der Kühlmittelstromumschalteinrichtung 152 beispielsweise zwischen einem parallelen Kühlmodus und einem seriellen Kühlmodus umgeschaltet werden kann. Dies ermöglicht es insbesondere, bei entsprechender Verbindung der Ausgänge 158, 160 und 162 mit den Kühlmittelkanälen 78 und 88, sowohl die oben im Zusammenhang mit den Ausführungsbeispielen der Figuren 2 und 3 beschriebenen Kühlmodi, also einerseits seriell wie in Figur 2 oder parallel wie in Figur 3 zu realisieren. Alternativ können auch die Ausführungsbeispiele der Figuren 4 und 5 mit der Kühlmittelstromumschalteinrichtung 152 entsprechend realisiert werden an einer einzigen Schubkammervorrichtung 10, so dass beispielsweise beim Starten der Schubkammervorrichtung 10 die regenerative Kühleinrichtung 50 mit einem seriellen Kühlmodus betrieben wird, beim Lastbetrieb oder einem stationären Betrieb mit einem parallelen Kühlmodus.

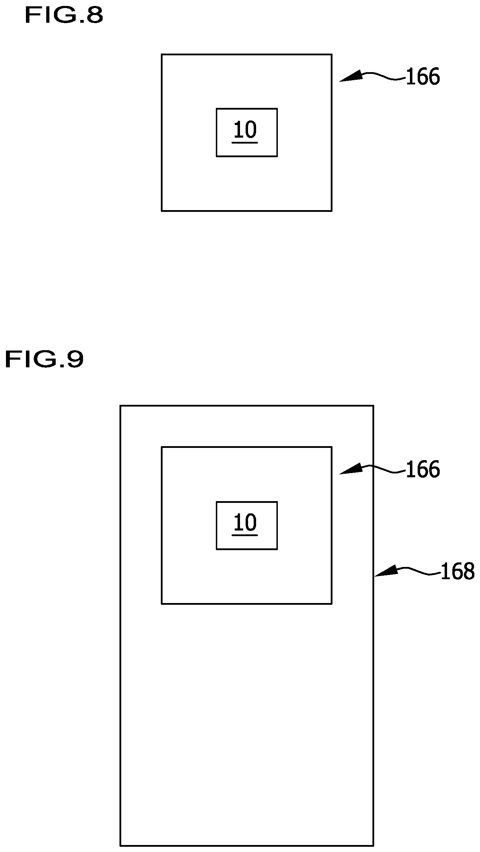

Wie schematisch in Figur 8 dargestellt, ist ein Triebwerk 166, beispielsweise für einen Flugkörper 168 oder ein Fluggerät, mit einer Schubkammervorrichtung 10 ausgestattet. Die Schubkammervorrichtung 10 ist dabei in Form einer Schubkammervorrichtung 10 gemäß einem der oben beschriebenen Ausführungsbeispiele ausgebildet.

Figur 9 zeigt schematisch ein Ausführungsbeispiel eines Flugkörpers 168 beziehungsweise eines Fluggeräts, welches ein Triebwerk 166 mit einer Schubkammervorrichtung 10 umfasst. Der Flugkörper 168 ist bei einem Ausführungsbeispiel in Form einer Rakete ausgebildet.

Die beschriebenen Ausführungsbeispiele von Schubkammervorrichtungen 10 ermöglichen eine effiziente Kühlung der Düsenwandungen 24 und 28. Zudem ist durch die besondere Form der inneren und äußeren Schubraumflächen 26 und 36 eine Baulänge der jeweiligen Schubkammer 12 signifikant verringert gegenüber herkömmlichen Schubkammervorrichtungen mit zylindrischem Schubraum beziehungsweise einer zylindrischen Brennkammer, an den beziehungsweise die sich eine Lavalle-Düse zur Ausbildung der engsten Stelle anschließt. Dies ermöglicht es, Schubkammervorrichtungen 10 mit im Vergleich zu bekannten Schubkammervorrichtungen deutlich reduziertem Gewicht auszubilden. So kann jede der oben beschriebenen Schubkammervorrichtung 10 bei gleicher Leistung wie eine herkömmliche Schubkammervorrichtung eine deutlich höhere Nutzlast beispielsweise in den erdnahen Weltraum befördern. Insgesamt kann so eine Schubkammervorrichtung 10 sehr effizient betrieben werden.

### Bezugszeichenliste

- 10: Schubkammervorrichtung
- 12: Schubkammer
- 14: erster Abschnitt
- 16: zweiter Abschnitt
- 18: dritter Abschnitt
- 20: Schubraum
- 22: Einschubkörper
- 24: innere Düsenwandung
- 26: innere Schubraumfläche
- 28: äußere Düsenwandung
- 30: Längsachse
- 32: Tangente
- 34: Ringbrennraum
- 36: äußere Schubraumfläche
- 38: Querschnittsfläche
- 40: Abstand
- 42: erstes Ende
- 44: Übergang
- 46: engste Stelle
- 48: Düsenaustritt
- 50: Kühleinrichtung
- 52: Kühlmittel
- 54: erster Treibstoffspeicher
- 56: erste Treibstoffkomponente
- 58: zweiter Treibstoffspeicher
- 60: zweite Treibstoffkomponente
- 62: Brennstoff
- 64: Oxidator
- 66: Verbindungsleitung
- 68: erste Fördereinrichtung
- 70: Saugseite
- 72: Druckseite
- 74: Verbindungsleitung
- 76: Ringverteiler
- 78: äußerer Kühlmittelkanal
- 80: äußerer Kühlmittelkanaleinlass
- 82: äußerer Kühlmittelkanalauslass
- 84: Verbindungsleitung
- 86: innerer Kühlmittelkanaleinlass
- 88: innerer Kühlmittelkanal
- 90: distales Ende
- 92: Sammler
- 94: innerer Kühlmittelkanalauslass
- 96: Verbindungsleitung
- 98: Fluideinlass
- 100: Antriebseinrichtung
- 102: Fluidauslass
- 104: Turbine
- 106: Verbindungsleitung
- 108: Verteilerraum
- 110: erster Treibstoffeinlass
- 112: Injektionswandung
- 114: zweite Fördereinrichtung
- 116: Antriebswelle
- 118: Verbindungsleitung
- 120: Saugseite
- 122: Verbindungsleitung
- 124: Druckseite
- 126: Verteilerraum
- 128: Einspritzkopf
- 130: zweite Treibstoffeinlässe
- 132: Kanalmündung
- 134: erste Treibstoffeinlasslängsachse
- 136: erste Injektionseinrichtung
- 138: zweite Treibstoffeinlasslängsachse
- 140: zweite Injektionseinrichtung
- 142: Verbindungsleitung
- 144: Verbindungsleitung
- 146: Verbindungsleitung
- 148: Verbindungsleitung
- 150: Verbindungsleitung
- 152: Kühlmittelstromumschalteinrichtung
- 154: Eingang
- 156: Verbindungsleitung
- 158: Ausgang
- 160: Ausgang
- 162: Ausgang
- 164: Ventileinrichtung
- 166: Triebwerk
- 168: Flugkörper

## Patentansprüche

1. Schubkammervorrichtung (10), umfassend eine Schubkammer (12) mit einem Schubraum (20), welcher einen ersten Abschnitt (14), einen sich daran anschließenden zweiten Abschnitt (16) und einen sich an den zweiten Abschnitt (16) anschließenden dritten Abschnitt (18) aufweist, wobei der Schubraum (20) in allen drei Abschnitten (14, 16, 18) von einer äußeren Düsenwandung (28) mit einer äußeren Schubraumfläche (36) begrenzt ist, welche äußere Schubraumfläche (36) sich im ersten und zweiten Abschnitt (14, 16) zum dritten Abschnitt (18) hin verjüngt und sich im dritten Abschnitt (18) von dem zweiten Abschnitt (16) weg erweitert, wobei eine engste Stelle (46) am Übergang von dem zweiten Abschnitt (16) zu dem dritten Abschnitt (18) ausgebildet ist, wobei der erste Abschnitt (14) von einer inneren Düsenwandung (24) mit einer inneren Schubraumfläche (26) begrenzt ist, welche sich zum zweiten Abschnitt (16) hin verjüngt und wobei zwischen der inneren Schubraumfläche (26) und der äußeren Schubraumfläche (36) ein Ringbrennraum (34) ausgebildet ist, welcher sich über den ersten Abschnitt (14) erstreckt, **dadurch gekennzeichnet, dass** die Schubkammervorrichtung (10) eine regenerative Kühleinrichtung (50) umfasst zum Kühlen der inneren Düsenwandung (24) und der äußeren Düsenwandung (28) mit einem Kühlmittel (52), um die bei der Kühlung der beiden Düsenwandungen (24, 28) vom Kühlmittel (52) aufgenommene Wärme beziehungsweise Enthalpie vollständig zu nutzen zum Antreiben einer Antriebseinrichtung (100), mit der eine oder mehrere Fördereinrichtungen (68, 114) für im Schubraum (20) zu verbrennende Treibstoffkomponenten (56, 58) angetrieben werden können.

2. Schubkammervorrichtung nach Anspruch 1, **dadurch gekennzeichnet, dass**
a) die regenerative Kühleinrichtung (50) eine Mehrzahl innerer Kühlmittelkanäle (88) in der inneren Düsenwandung (24) und eine Mehrzahl äußerer Kühlmittelkanäle (78) in der äußeren Düsenwandung (28) umfasst und dass die Mehrzahl innerer Kühlmittelkanäle (88) und die Mehrzahl äußerer Kühlmittelkanäle (78) ausgebildet sind zum Durchströmen mit dem Kühlmittel (52) und/oder
b) die innere Düsenwandung (24) und/oder die äußere Düsenwandung (28) aus einem keramischen und/oder metallischen Werkstoff ausgebildet sind
und/oder
c) die innere Schubraumfläche (26) und/oder die äußere Schubraumfläche (36) mindestens teilweise die Form eines Rotationshyperboloids aufweisen oder eine kontinuierlich konkave Längsschnittlinie aufweisen
und/oder
d) die innere Schubraumfläche (26) in Richtung auf die äußere Schubraumfläche (36) hin weisend konvex gekrümmt oder im Wesentlichen konvex gekrümmt ausgebildet ist
und/oder
e) die äußere Schubraumfläche (36) in Richtung auf die innere Schubraumfläche (26) hin weisend konvex gekrümmt oder im Wesentlichen konvex gekrümmt ausgebildet ist.

3. Schubkammervorrichtung nach einem der voranstehenden Ansprüche, **dadurch gekennzeichnet, dass**
a) die Schubkammer (12) eine Längsachse (30) definiert und dass die Schubkammer (12), insbesondere der erste Abschnitt (14)
und/oder der zweite Abschnitt (16) und/oder der dritte Abschnitt (18), rotationssymmetrisch bezogen auf die Längsachse (30) ausgebildet sind,
wobei insbesondere die äußere Schubraumfläche (36) und/oder die innere Schubraumfläche (26) rotationssymmetrisch bezogen auf die Längsachse (30) ausgebildet sind,
und/oder
b) der Ringbrennraum (34) eine konstante oder im Wesentlichen konstante Querschnittsfläche aufweist.

4. Schubkammervorrichtung nach einem der voranstehenden Ansprüche, **dadurch gekennzeichnet, dass** die Schubkammervorrichtung (10) eine Mehrzahl erster Treibstoffeinlässe (110) für eine erste Treibstoffkomponente (56) und eine Mehrzahl zweiter Treibstoffeinlässe (130) für eine zweite Treibstoffkomponente (60) umfasst,
wobei insbesondere der erste Abschnitt (14) des Schubraums (20) an einem vom zweiten Abschnitt (16) weg weisenden Ende (42) von einer Injektionswandung (112) begrenzt ist, welche die innere Düsenwandung (24) und die äußere Düsenwandung (28) miteinander verbindet, und wobei die Mehrzahl erster Treibstoffeinlässe (110) und die Mehrzahl zweiter Treibstoffeinlässe (130) in der Injektionswandung (112) angeordnet oder ausgebildet sind,
wobei weiter insbesondere
a) die Injektionswandung (112) ringförmig oder rotationssymmetrisch oder Hyperboloid-ähnlich ausgebildet ist zum Verschließen des ringförmigen Ringbrennraums (34)
und/oder
b) die Schubkammervorrichtung (10) einen Einspritzkopf (128) umfasst und wobei der Einspritzkopf (128) die Injektionswandung (112) umfasst.

5. Schubkammervorrichtung nach Anspruch 4, **dadurch gekennzeichnet, dass**
a) die Mehrzahl erster Treibstoffeinlässe (110) und die Mehrzahl zweiter Treibstoffeinlässe (130) in Form von Kanälen ausgebildet sind, welche in den Ringbrennraum (34) weisende Kanalmündungen (132) aufweisen,
und/oder
b) die Mehrzahl erster Treibstoffeinlässe (110) erste Treibstoffeinlasslängsachsen (134) definieren und dass die ersten Treibstoffeinlasslängsachsen (134) in den ersten Abschnitt (14) hinein in einer Richtung parallel oder im Wesentlichen parallel zu Tangenten an die innere Schubraumfläche (26) und/oder die äußere Schubraumfläche (36) weisen
und/oder
c) die Schubkammervorrichtung eine erste Injektionseinrichtung (136) umfasst zum Injizieren der mindestens einen ersten Treibstoffkomponente (56) in den Schubraum (20) durch die Mehrzahl erster Treibstoffeinlässe (110),
wobei insbesondere die Schubkammervorrichtung (10) einen ersten Treibstoffspeicher (54) für eine erste Treibstoffkomponente (56) umfasst und wobei die erste Injektionseinrichtung (136) eine erste Fördereinrichtung (68) zum Fördern der mindestens einen ersten Treibstoffkomponente (56) aus dem ersten Treibstoffspeicher (54) durch die Mehrzahl erster Treibstoffeinlässe (110) in den Schubraum (20) umfasst,
wobei weiter insbesondere die erste Fördereinrichtung (68) eine Saugseite (70) und eine Druckseite (72) aufweist, wobei die Saugseite (70) fluidwirksam mit dem ersten Treibstoffspeicher (54) verbunden ist und wobei die Druckseite (72) fluidwirksam mit den äußeren Kühlmittelkanälen (78) und/oder den inneren Kühlmittelkanälen (88) verbunden ist,
und/oder
d) die Mehrzahl zweiter Treibstoffeinlässe (130) zweite Treibstoffeinlasslängsachsen (138) definieren und dass die zweiten Treibstoffeinlasslängsachsen (138) in den ersten Abschnitt (14) hinein in einer Richtung parallel oder im Wesentlichen parallel zu Tangenten an die innere Schubraumfläche (26) und/oder die äußere Schubraumfläche (36) weisen
und/oder
e) die Schubkammervorrichtung eine zweite Injektionseinrichtung (140) umfasst zum Injizieren der mindestens einen zweiten Treibstoffkomponente (60) in den Schubraum (20) durch die Mehrzahl zweiter Treibstoffeinlässe (130),
wobei insbesondere die Schubkammervorrichtung (10) mindestens einen zweiten Treibstoffspeicher (58) für mindestens eine zweite Treibstoffkomponente (60) umfasst und wobei die zweite Injektionseinrichtung (140) eine zweite Fördereinrichtung (114) zum Fördern der mindestens einen zweiten Treibstoffkomponente (60) aus dem zweiten Treibstoffspeicher (58) durch die Mehrzahl zweiter Treibstoffeinlässe (130) in den Schubraum (20) umfasst,
und/oder
f) die erste Treibstoffkomponente (56) das Kühlmittel (52) bildet
und/oder
g) die erste Treibstoffkomponente (56) ein flüssiger Brennstoff (62), insbesondere flüssiger Wasserstoff oder flüssiges Methan oder verflüssigtes Erdgas, ist
und/oder
h) die zweite Treibstoffkomponente (60) ein flüssiges Oxidationsmittel (64), insbesondere flüssiger Sauerstoff, ist.

6. Schubkammervorrichtung nach Anspruch 4 oder 5, **dadurch gekennzeichnet, dass** die Schubkammervorrichtung eine erste Injektionseinrichtung (136) umfasst zum Injizieren der mindestens einen ersten Treibstoffkomponente (56) in den Schubraum (20) durch die Mehrzahl erster Treibstoffeinlässe (110), dass die Schubkammervorrichtung (10) einen ersten Treibstoffspeicher (54) für eine erste Treibstoffkomponente (56) umfasst, dass die erste Injektionseinrichtung (136) eine erste Fördereinrichtung (68) zum Fördern der mindestens einen ersten Treibstoffkomponente (56) aus dem ersten Treibstoffspeicher (54) durch die Mehrzahl erster Treibstoffeinlässe (110) in den Schubraum (20) umfasst und dass die Schubkammervorrichtung (10) eine Antriebseinrichtung (100) zum Antreiben der ersten Fördereinrichtung (68) und/oder der zweiten Fördereinrichtung (114) umfasst,
wobei insbesondere die Antriebseinrichtung (100)
a) in Form einer Turbine (104), insbesondere einer Gasturbine, ausgebildet ist
und/oder
b) einen Fluideinlass (98) und einen Fluidauslass (102) umfasst und wobei der Fluidauslass (102) mit den ersten Treibstoffeinlässen (110) fluidwirksam verbunden ist.

7. Schubkammervorrichtung nach einem der Ansprüche 2 bis 6, **dadurch gekennzeichnet, dass** die äußeren Kühlmittelkanäle (78) äußere Kühlmittelkanaleinlässe (80) und äußere Kühlmittelkanalauslässe (82) aufweisen und dass die inneren Kühlmittelkanäle (88) innere Kühlmittelkanaleinlässe (86) und innere Kühlmittelkanalauslässe (94) aufweisen,
wobei insbesondere die Druckseite (72) der ersten Fördereinrichtung (68)
a) mit den äußeren Kühlmittelkanaleinlässen (80) fluidwirksam verbunden ist, wobei die äußeren Kühlmittelkanalauslässe (82) mit den inneren Kühlmittelkanaleinlässen (86) fluidwirksam verbunden sind und wobei die inneren Kühlmittelkanalauslässe (94) fluidwirksam mit dem Fluideinlass (98) der Antriebseinrichtung (100) verbunden sind
oder
b) mit den äußeren Kühlmittelkanaleinlässen (80) und den inneren Kühlmittelkanaleinlässen (86) fluidwirksam verbunden ist und wobei die äußeren Kühlmittelkanalauslässe (82) und die inneren Kühlmittelkanalauslässe (94) fluidwirksam mit dem Fluideinlass (98) der Antriebseinrichtung (100) verbunden sind
oder
c) mit den inneren Kühlmittelkanaleinlässen (86) fluidwirksam verbunden ist, wobei die inneren Kühlmittelkanalauslässe (82) mit den äußeren Kühlmittelkanaleinlässen (80) fluidwirksam verbunden sind und wobei die äußeren Kühlmittelkanalauslässe (82) fluidwirksam mit dem Fluideinlass (98) der Antriebseinrichtung (100) verbunden sind.

8. Schubkammervorrichtung nach Anspruch 7, **dadurch gekennzeichnet, dass** die Schubkammervorrichtung (10) eine Kühlmittelstromumschalteinrichtung (152) umfasst zum wahlweisen Umschalten eines Kühlmittelstroms parallel oder seriell durch die inneren Kühlmittelkanäle (88) und die äußeren Kühlmittelkanäle (78),
wobei insbesondere die Kühlmittelstromschalteinrichtung (152) eine Ventileinrichtung (164) umfasst.

9. Triebwerk (166), insbesondere für einen Flugkörper (168) oder ein Fluggerät, umfassend eine Schubkammervorrichtung (10) nach einem der voranstehenden Ansprüche.

10. Flugkörper (168) oder Fluggerät, umfassend einen ersten Treibstoffspeicher (54) für mindestens eine erste Treibstoffkomponente (56), einen zweiten Treibstoffspeicher (58) für mindestens eine zweite Treibstoffkomponente (60) und ein Triebwerk (166) nach Anspruch 9.

11. Verfahren zum Betreiben einer Schubkammervorrichtung (10) nach einem der Ansprüche 1 bis 8, **dadurch gekennzeichnet, dass** die innere Düsenwandung (24) und die äußere Düsenwandung (28) mit einem Kühlmittel (52) regenerativ gekühlt werden, um die bei der Kühlung der beiden Düsenwandungen (24, 28) vom Kühlmittel (52) aufgenommene Wärme beziehungsweise Enthalpie vollständig zu nutzen zum Antreiben einer Antriebseinrichtung (100), mit der eine oder mehrere Fördereinrichtungen (68, 114) für im Schubraum (20) zu verbrennende Treibstoffkomponenten (56, 58) angetrieben werden können.

12. Verfahren nach Anspruch 11, **dadurch gekennzeichnet, dass** als Kühlmittel (52) die erste Treibstoffkomponente (56) verwendet wird.

13. Verfahren nach Anspruch 11 oder 12, **dadurch gekennzeichnet, dass** das Kühlmittel (52)
a) parallel durch die äußere Düsenwandung (28) und die innere Düsenwandung (24) geleitet wird, insbesondere bei einem Normal- oder Lastbetrieb der Schubkammervorrichtung (10),
oder
b) erst durch die innere Düsenwandung (24) und dann durch die äußere Düsenwandung (28)
oder
erst durch die äußere Düsenwandung (28) und dann durch die innere Düsenwandung (24) geleitet wird.

14. Verfahren nach einem der Ansprüche 11 bis 13, **dadurch gekennzeichnet, dass** ein Kühlmodus beim Ändern eines Betriebsmodus der Schubkammervorrichtung (10) geändert wird,
wobei insbesondere in einem Startmodus der Schubkammervorrichtung (10) ein serieller Kühlmodus gemäß Anspruch 13 durchgeführt wird und wobei in einem Lastmodus der Schubkammervorrichtung (10) ein paralleler Kühlmodus gemäß Anspruch 13 durchgeführt wird.

15. Verfahren nach einem der Ansprüche 11 bis 14, **dadurch gekennzeichnet, dass** das Kühlmittel (52)
a) vor oder nach dem Durchströmen der inneren Düsenwandung (24) und der äußeren Düsenwandung (28) die Antriebseinrichtung (100) durchströmt
und/oder
b) nach dem Durchströmen der inneren Düsenwandung (24) und/oder der äußeren Düsenwandung (28) durch die ersten Treibstoffeinlässe (110) in die Schubkammer (12) injiziert wird.

## Claims

1. Thrust chamber device (10), comprising a thrust chamber (12) with a thrust space (20) that has a first portion (14), a second portion (16) adjoining the first portion (14), and a third portion (18) adjoining the second portion (16), wherein the thrust space (20) is delimited in all three portions (14, 16, 18) by an outer nozzle wall (28) with an outer thrust space surface (36), which outer thrust space surface (36) tapers in the first and second portion (14, 16) toward the third portion (18) and in the third portion (18) expands away from the second portion (16), wherein a narrowest point (46) is formed at the transition from the second portion (16) to the third portion (18), wherein the first portion (14) is delimited by an inner nozzle wall (24) with an inner thrust space surface (26), which tapers toward the second portion (16), and wherein formed between the inner thrust space surface (26) and the outer thrust space surface (36) is an annular combustion space (34), which extends over the first portion (14), **characterized in that** the thrust chamber device (10) comprises a regenerative cooling unit (50) for cooling the inner nozzle wall (24) and the outer nozzle wall (28) with a coolant (52), in order to fully use the heat or enthalpy absorbed when cooling the two nozzle walls (24, 28) for driving a drive unit (100), with which one or more conveying units (68, 114) for propellant components (56, 58) to be combusted in the thrust space (20) can be driven.

2. Thrust chamber device in accordance with Claim 1, **characterized in that**
a) the regenerative cooling unit (50) comprises a plurality of inner coolant channels (88) in the inner nozzle wall (24) and a plurality of outer coolant channels (78) in the outer nozzle wall (28) and **in that** the plurality of inner coolant channels (88) and the plurality of outer coolant channels (78) are configured to be flowed through by the coolant (52)
and/or
b) the inner nozzle wall (24) and/or the outer nozzle wall (28) are
made of a ceramic and/or metallic material
and/or
c) the inner thrust space surface (26) and/or the outer thrust space surface (36) at least partially have the form of a hyperboloid of revolution or have a continuously concave longitudinal sectional line
and/or
d) the inner thrust space surface (26) is of convexly curved or substantially convexly curved configuration pointing in the direction toward the outer thrust space surface (36)
and/or
e) the outer thrust space surface (36) is of convexly curved or substantially convexly curved configuration pointing in the direction toward the inner thrust space surface (26).

3. Thrust chamber device in accordance with any one of the preceding Claims, **characterized in that**
a) the thrust chamber (12) defines a longitudinal axis (30) and **in that** the thrust chamber (12), in particular the first portion (14) and/or the second portion (16) and/or the third portion (18), are of rotationally symmetrical configuration relative to the longitudinal axis (30),
wherein, in particular, the outer thrust space surface (36) and/or the inner thrust space surface (26) are of rotationally symmetrical configuration relative to the longitudinal axis (30),
and/or
b) the annular combustion space (34) has a constant or substantially constant cross sectional area.

4. Thrust chamber device in accordance with any one of the preceding Claims, **characterized in that** the thrust chamber device (10) comprises a plurality of first propellant inlets (110) for a first propellant component (56) and a plurality of second propellant inlets (130) for a second propellant component (60),
wherein, in particular, the first portion (14) of the thrust space (20) is delimited on an end (42) pointing away from the second portion (16) by an injection wall (112), which connects the inner nozzle wall (24) and the outer nozzle wall (28) to one another, and wherein the plurality of first propellant inlets (110) and the plurality of second propellant inlets (130) are arranged or formed in the injection wall (112),
wherein, further in particular,
a) the injection wall (112) is of annular or rotationally symmetrical or hyperboloid-like configuration for closing the ring-shaped annular combustion space (34)
and/or
b) the thrust chamber device (10) comprises an injection head (128) and wherein the injection head (128) comprises the injection wall (112).

5. Thrust chamber device in accordance with Claim 4, **characterized in that**
a) the plurality of first propellant inlets (110) and the plurality of second propellant inlets (130) are configured in the form of channels, which have channel openings (132) pointing into the annular combustion space (34),
and/or
b) the plurality of first propellant inlets (110) define first propellant inlet longitudinal axes (134) and **in that** the first propellant inlet longitudinal axes (134) point into the first portion (14) in a direction parallel or substantially parallel to tangents to the inner thrust space surface (26) and/or the outer thrust space surface (36)
and/or
c) the thrust chamber device comprises a first injection unit (136) for injecting the at least one first propellant component (56) into the thrust space (20) through the plurality of first propellant inlets (110),
wherein, in particular, the thrust chamber device (10) comprises a first propellant store (54) for a first propellant component (56) and wherein the first injection unit (136) comprises a first conveying unit (68) for conveying the at least one first propellant component (56) from the first propellant store (54) through the plurality of first propellant inlets (110) into the thrust space (20),
wherein, further in particular, the first conveying unit (68) has a suction side (70) and a pressure side (72), wherein the suction side (70) is fluidically connected to the first propellant store (54), and wherein the pressure side (72) is fluidically connected to the outer coolant channels (78) and/or the inner coolant channels (88),
and/or
d) the plurality of second propellant inlets (130) define second propellant inlet longitudinal axes (138) and **in that** the second propellant inlet longitudinal axes (138) point into the first portion (14) in a direction parallel or substantially parallel to tangents to the inner thrust space surface (26) and/or the outer thrust space surface (36)
and/or
e) the thrust chamber device comprises a second injection unit (140) for injecting the at least one second propellant component (60) into the thrust space (20) through the plurality of second propellant inlets (130),
wherein, in particular, the thrust chamber device (10) comprises at least one second propellant store (58) for at least one second propellant component (60) and wherein the second injection unit (140) comprises a second conveying unit (114) for conveying the at least one second propellant component (60) from the second propellant store (58) through the plurality of second propellant inlets (130) into the thrust space (20)
and/or
f) the first propellant component (56) forms the coolant (52)
and/or
g) the first propellant component (56) is a liquid fuel (62), in particular liquid hydrogen or liquid methane or liquefied natural gas,
and/or
h) the second propellant component (60) is a liquid oxidizer (64), in particular liquid oxygen.

6. Thrust chamber device in accordance with Claim 4 or 5, **characterized in that** the thrust chamber device comprises a first injection unit (136) for injecting the at least one first propellant component (56) into the thrust space (20) through the plurality of first propellant inlets (110), **in that** the thrust chamber device (10) comprises a first propellant store (54) for a first propellant component (56), **in that** the first injection unit (136) comprises a first conveying unit (68) for conveying the at least one first propellant component (56) from the first propellant store (54) through the plurality of first propellant inlets (110) into the thrust space (20), and **in that** the thrust chamber device (10) comprises a drive unit (100) for driving the first conveying unit (68) and/or the second conveying unit (114),
wherein, in particular, the drive unit (100)
a) is configured in the form of a turbine (104), in particular a gas turbine,
and/or
b) comprises a fluid inlet (98) and a fluid outlet (102) and wherein the fluid outlet (102) is fluidically connected to the first propellant inlets (110).

7. Thrust chamber device in accordance with any one of Claims 2 to 6, **characterized in that** the outer coolant channels (78) comprise outer coolant channel inlets (80) and outer coolant channel outlets (82) and **in that** the inner coolant channels (88) comprise inner coolant channel inlets (86) and inner coolant channel outlets (94),
wherein, in particular, the pressure side (72) of the first conveying unit (68)
a) is fluidically connected to the outer coolant channel inlets (80), wherein the outer coolant channel outlets (82) are fluidically connected to the inner coolant channel inlets (86), and wherein the inner coolant channel outlets (94) are fluidically connected to the fluid inlet (98) of the drive unit (100)
or
b) is fluidically connected to the outer coolant channel inlets (80) and the inner coolant channel inlets (86), and wherein the outer coolant channel outlets (82) and the inner coolant channel outlets (94) are fluidically connected to the fluid inlet (98) of the drive unit (100)
or
c) is fluidically connected to the inner coolant channel inlets (86), wherein the inner coolant channel outlets (82) are fluidically connected to the outer coolant channel inlets (80), and wherein the outer coolant channel outlets (82) are fluidically connected to the fluid inlet (98) of the drive unit (100).

8. Thrust chamber device in accordance with Claim 7, **characterized in that** the thrust chamber device (10) comprises a coolant flow switching unit (152) for selectively switching a coolant flow in parallel or serially through the inner coolant channels (88) and the outer coolant channels (78),
wherein, in particular, the coolant flow switching unit (152) comprises a valve unit (164).

9. Engine (166), in particular for a flying object (168) or an aircraft, comprising a thrust chamber device (10) in accordance with any one of the preceding Claims.

10. Flying object (168) or aircraft, comprising a first propellant store (54) for at least one first propellant component (56), a second propellant store (58) for at least one second propellant component (60), and an engine (166) in accordance with Claim 9.

11. Method for operating a thrust chamber device (10) in accordance with any one of Claims 1 to 8, **characterized in that** the inner nozzle wall (24) and the outer nozzle wall (28) are regeneratively cooled with a coolant (52), in order to fully use the heat or enthalpy absorbed by the coolant (52) when cooling the two nozzle walls (24, 28) for driving a drive unit (100), with which one or more conveying units (68, 114) for propellant components (56, 58) to be combusted in the thrust space (20) can be driven.

12. Method in accordance with Claim 11, **characterized in that** the first propellant component (56) is used as coolant (52).

13. Method in accordance with Claim 11 or 12, **characterized in that** the coolant (52)
a) is conducted in parallel through the outer nozzle wall (28) and the inner nozzle wall (24), in particular when the thrust chamber device (10) is in a stable operating mode or in a load mode,
or
b) is conducted first through the inner nozzle wall (24) and then through the outer nozzle wall (28)
or
first through the outer nozzle wall (28) and then through the inner nozzle wall (24).

14. Method in accordance with any one of Claims 11 to 13, **characterized in that** a cooling mode is changed when changing an operating mode of the thrust chamber device (10),
wherein, in particular, in a start mode of the thrust chamber device (10) a serial cooling mode is performed in accordance with Claim 13 and
wherein in a load mode of the thrust chamber device (10) a parallel cooling mode is performed in accordance with Claim 13.

15. Method in accordance with any one of Claims 11 to 14, **characterized in that** the coolant (52)
a) flows through the drive unit (100) before or after flowing through the inner nozzle wall (24) and the outer nozzle wall (28)
and/or
b) is injected through the first propellant inlets (110) into the thrust chamber (12) after flowing through the inner nozzle wall (24) and/or the outer nozzle wall (28).

## Revendications

1. Dispositif à chambre de poussée (10), comprenant une chambre de poussée (12) avec un compartiment de poussée (20) qui comprend une première portion (14), une deuxième portion (16) qui s'y raccorde et une troisième portion (18) qui se raccorde à la deuxième portion (16), dans lequel le compartiment de poussée (20) est délimitée, dans les trois portions (14, 16, 18), par une paroi de buse externe (28) avec une surface de compartiment de poussée externe (36), cette surface de compartiment de poussée externe (36) se rétrécissant dans les première et deuxième portions (14, 16), en direction de la troisième portion (18) et s'élargissant, dans la troisième portion (18), en s'éloignant de la deuxième portion (16), dans lequel l'endroit le plus étroit (46) est réalisé au niveau de la transition entre la deuxième portion (16) et la troisième portion (18), dans lequel la première portion (14) est délimitée par une paroi de buse interne (24) avec une surface de compartiment de poussée interne (26) qui se rétrécit en direction de la deuxième portion (16) et dans lequel, entre la surface de compartiment de poussée interne (26) et la surface de compartiment de poussée externe (36), est réalisé un espace de combustion annulaire (34) qui s'étend au-dessus de la première portion (14), **caractérisé en ce que** le dispositif à chambre de poussée (10) comprend un dispositif de refroidissement régénérateur (50) pour le refroidissement de la paroi de buse interne (24) et de la paroi de buse externe (28) avec un produit de refroidissement (52), afin d'utiliser entièrement la chaleur, respectivement l'enthalpie, absorbée lors du refroidissement des deux parois de buse (24, 28) par le produit de refroidissement (52), pour l'entraînement d'un dispositif d'entraînement (100) avec lequel un ou plusieurs dispositifs de convoyage (68, 114) pour les composants de combustible (56, 58) à brûler dans le compartiment de poussée (20) peuvent être entraînés.

2. Dispositif à chambre de poussée selon la revendication 1, **caractérisé en ce que**
a) le dispositif de refroidissement régénérateur (50) comprend une pluralité de canaux de produit de refroidissement internes (88) dans la paroi de buse interne (24) et une pluralité de canaux de produit de refroidissement externes (78) dans la paroi de buse externe (28) et **en ce que** la pluralité de canaux de produit de refroidissement internes (88) et la pluralité de canaux de produit de refroidissement externes (78) sont conçus pour être traversés par le produit de refroidissement (52)
et/ou
b) la paroi de buse interne (24) et/ou la paroi de buse externe (28) sont constituées d'un matériau céramique et/ou métallique
et/ou
c) la surface de compartiment de poussée interne (26) et/ou la surface de compartiment de poussée externe (36) présentent au moins partiellement la forme d'un hyperboloïde de rotation ou une ligne de coupe longitudinale concave continue
et/ou
d) la surface de compartiment de poussée interne (26) est incurvée de manière convexe ou de manière essentiellement convexe en direction de la surface de compartiment de poussée externe (36)
et/ou
e) la surface de compartiment de poussée externe (36) est incurvée de manière convexe ou de manière essentiellement convexe en direction de la surface de compartiment de poussée interne (26).

3. Dispositif à chambre de poussée selon l'une des revendications précédentes, **caractérisé en ce que**
a) la chambre de poussée (12) définit un axe longitudinal (30) et **en ce que** la chambre de poussée (12), plus particulièrement la première portion (14) et/ou la deuxième portion (16) et/ou la troisième portion (18), est réalisée avec une symétrie de rotation par rapport à l'axe longitudinal (30),
dans lequel, plus particulièrement, la surface de compartiment de poussée externe (36) et/ou la surface de compartiment de poussée interne (26) sont réalisées avec une symétrie de rotation par rapport à l'axe longitudinal (30),
et/ou
b) la chambre de combustion annulaire (34) présente une surface de section transversale constante ou essentiellement constante.

4. Dispositif à chambre de poussée selon l'une des revendications précédentes, **caractérisé en ce que** le dispositif à chambre de poussée (10) comprend une pluralité de premières entrées de combustible (110) pour un premier composant de combustible (56) et une pluralité de deuxièmes entrées de combustible (130) pour un deuxième composant de combustible (60),
dans lequel plus particulièrement la première portion (14) du compartiment de poussée (20) est délimitée, au niveau d'une extrémité (42) opposée à la deuxième portion (16), par une paroi d'injection (112) qui relie entre elles la paroi de buse interne (24) et la paroi de buse externe (28) et dans lequel la pluralité de premières entrées de combustible (110) et la pluralité de deuxièmes entrées de combustible (130) sont disposées ou réalisées dans la paroi d'injection (112),
dans lequel, plus particulièrement
a) la paroi d'injection (112) présente une forme annulaire ou une forme à symétrie de rotation ou une forme d'hyperboloïde, pour l'obturation de la chambre de combustion annulaire (34)
et/ou
b) le dispositif à chambre de poussée (10) comprend une tête d'injection (128) et dans lequel la tête d'injection (128) comprend la paroi d'injection (112).

5. Dispositif à chambre de poussée selon la revendication 4, **caractérisé en ce que**
a) la pluralité de premières entrées de combustible (110) et la pluralité de deuxièmes entrées de combustible (130) sont réalisées sous la forme de canaux qui présentent des embouchures de canaux (132) orientées vers la chambre de combustion annulaire (34),
et/ou
b) la pluralité de premières entrées de combustible (110) définissent des premiers axes longitudinaux d'entrées de combustible (134) et **en ce que** les premiers axes d'entrées de combustible (134) sont orientés vers l'intérieur de la première portion (14) dans une direction parallèle ou essentiellement parallèle à des tangentes de la surface de compartiment de poussée interne (26) et/ou de la surface de compartiment de poussée externe (36),
et/ou
c) le dispositif à chambre de poussée comprend un premier dispositif d'injection (136) pour l'injection de l'au moins un premier composant de combustible (56) dans le compartiment de poussée (20) à travers la pluralité de premières entrées de combustible (110),
dans lequel, plus particulièrement, le dispositif à chambre de poussée (10) comprend un premier réservoir de combustible (54) pour un premier composant de combustible (56) et dans lequel le premier dispositif d'injection (136) comprend un premier dispositif de convoyage (68) pour le convoyage de l'au moins un premier composant de combustible (56) du premier réservoir de combustible (54) vers le compartiment de poussée (20) à travers la pluralité de premières entrées de combustible (110),
dans lequel, encore plus particulièrement, le premier dispositif de convoyage (68) présente un côté d'aspiration (70) et un côté de pression (72), dans lequel le côté d'aspiration (70) est relié de manière fluidique avec le premier réservoir de combustible (54) et dans lequel le côté de pression (72) est relié de manière fluidique avec les canaux de produit de refroidissement externes (78) et/ou les canaux de produit de refroidissement internes (88),
et/ou
d) la pluralité de deuxièmes entrées de combustible (130) définissent des deuxièmes axes longitudinaux d'entrées de combustible (138) et **en ce que** les deuxièmes axes longitudinaux d'entrées de combustible (138) sont orientés vers l'intérieur de la première portion (14) dans une direction parallèle ou essentiellement parallèle à des tangentes de la surface de compartiment de poussée interne (26) et/ou de la surface de compartiment de poussée externe (36),
et/ou
e) le dispositif à chambre de poussée comprend un deuxième dispositif d'injection (140) pour l'injection de l'au moins un deuxième composant de combustible (60) dans le compartiment de poussée (20) à travers la pluralité de deuxièmes entrées de combustible (130),
dans lequel, plus particulièrement, le dispositif à chambre de poussée (10) comprend un deuxième réservoir de combustible (58) pour au moins un deuxième composant de combustible (60) et dans lequel le deuxième dispositif d'injection (140) comprend un deuxième dispositif de convoyage (114) pour le convoyage de l'au moins un deuxième composant de combustible (60) du deuxième réservoir de combustible (58) vers le compartiment de poussée (20) à travers la pluralité de deuxièmes entrées de combustible (130),
et/ou
f) le premier composant de combustible (56) constitue le produit de refroidissement (52)
et/ou
g) le premier composant de combustible (56) est un carburant liquide (62), plus particulièrement de l'hydrogène liquide ou du méthane liquide ou du gaz naturel liquéfié,
et/ou
h) le deuxième composant de combustible (60) est un agent d'oxydation liquide (64), plus particulièrement de l'oxygène liquide.

6. Dispositif à chambre de poussée selon la revendication 4 ou 5, **caractérisé en ce que** le dispositif à chambre de poussée comprend un premier dispositif d'injection (136) pour l'injection de l'au moins un premier composant de combustible (56) dans le compartiment de poussée (20) à travers la pluralité de premières entrées de combustible (110), **en ce que** le dispositif à chambre de poussée (10) comprend un premier réservoir de combustible (54) pour un premier composant de combustible (56), **en ce que** le premier dispositif d'injection (136) comprend un premier dispositif de convoyage (68) pour le convoyage de l'au moins un premier composant de combustible (56) du premier réservoir de combustible (54) vers le compartiment de poussée (20) à travers la pluralité de premières entrées de combustible (110) et **en ce que** le dispositif à chambre de poussée (10) comprend un dispositif d'entraînement (100) pour l'entraînement du premier dispositif de convoyage (68) et/ou du deuxième dispositif de convoyage (114),
dans lequel, plus particulièrement, le dispositif d'entraînement (100)
a) est conçu sous la forme d'une turbine (104), plus particulièrement une turbine à gaz,
et/ou
b) comprend une entrée de fluide (98) et une sortie de fluide (102) et dans lequel la sortie de fluide (102) est reliée de manière fluidique avec les premières entrées de combustible (110).

7. Dispositif à chambre de poussée selon l'une des revendications 2 à 6, **caractérisé en ce que** les canaux de produit de refroidissement externes (78) comprennent des entrées de canaux de produit de refroidissement externes (80) et des sorties de canaux de produit de refroidissement externes (82) et **en ce que** les canaux de produit de refroidissement internes (88) comprennent des entrées de canaux de produit de refroidissement internes (86) et des sorties de canaux de produit de refroidissement internes (94),
dans lequel, plus particulièrement, le côté de pression (72) du premier dispositif de convoyage (68)
a) est relié de manière fluidique avec les entrées de canaux de produit de refroidissement externes (80), dans lequel les sorties de canaux de produit de refroidissement externes (82) sont reliées de manière fluidique avec les entrées de canaux de produit de refroidissement internes (86) et dans lequel les sorties de canaux de produit de refroidissement internes (94) sont reliées de manière fluidique avec l'entrée de fluide (98) du dispositif d'entraînement (100),
et/ou
b) est relié de manière fluidique avec les entrées de canaux de produit de refroidissement externes (80) et les entrées de canaux de produit de refroidissement internes (86) et dans lequel les sorties de canaux de produit de refroidissement externes (82) et les sorties de canaux de produit de refroidissement internes (94) sont reliées de manière fluidique avec l'entrée de fluide (98) du dispositif d'entraînement (100),
et/ou
c) est relié de manière fluidique avec les entrées de canaux de produit de refroidissement internes (86), dans lequel les sorties de canaux de produit de refroidissement externes (82) sont reliées de manière fluidique avec les entrées de canaux de produit de refroidissement externes (80) et dans lequel les sorties de canaux de produit de refroidissement externes (82) sont reliées de manière fluidique avec l'entrée de fluide (98) du dispositif d'entraînement (100).

8. Dispositif à chambre de poussée selon la revendication 7, **caractérisé en ce que** le dispositif à chambre de poussée (10) comprend un dispositif de commutation de flux de produit de refroidissement (152) pour la commutation sélective d'un flux de produit de refroidissement parallèlement ou en série à travers les canaux de produit de refroidissement internes (88) et les canaux de produit de refroidissement externes (78),
dans lequel, plus particulièrement, le dispositif de commutation de flux de produit de refroidissement (152) comprend un dispositif à soupape (164).

9. Propulseur (166), plus particulièrement pour un missile (168) ou un aéronef, comprenant un dispositif à chambre de poussée (10) selon l'une des revendications précédentes.

10. Missile (168) ou aéronef comprenant un premier réservoir de combustible (54) pour au moins un premier composant de combustible (56), un deuxième réservoir de combustible (58) pour au moins un deuxième composant de combustible (60) et un propulseur (166) selon la revendication 9.

11. Procédé de fonctionnement d'un dispositif à chambre de poussée (10) selon l'une des revendications 1 à 8, **caractérisé en ce que** la paroi de buse interne (24) et la paroi de buse externe (28) sont refroidies de manière régénérative avec un produit de refroidissement (52), afin d'utiliser entièrement la chaleur, respectivement l'enthalpie, absorbée par le produit de refroidissement (52), lors du refroidissement des deux parois de buse (24, 28), pour l'entraînement d'un dispositif d'entraînement (100) avec lequel un ou plusieurs dispositifs de convoyage (68, 114) pour les composants de combustible (56, 58) à brûler dans le compartiment de poussée (20) peuvent être entraînés.

12. Procédé selon la revendication 11, **caractérisé en ce que** le produit de refroidissement (52) utilisé est le premier composant de combustible (56).

13. Procédé selon la revendication 11 ou 12, **caractérisé en ce que** le produit de refroidissement (52)
a) est guidé parallèlement par la paroi de buse externe (28) et la paroi de buse interne (24), plus particulièrement lors d'un fonctionnement normal ou en charge du dispositif à chambre de poussée (10),
ou
b) d'abord par la paroi de buse interne (24) puis par la paroi de buse externe (28)
ou
d'abord par la paroi de buse externe (28) puis par la paroi de buse interne (24).

14. Procédé selon l'une des revendications 11 à 13, **caractérisé en ce qu'**un mode de refroidissement est modifié lors de la modification d'un mode de fonctionnement du dispositif à chambre de poussée (10),
dans lequel, plus particulièrement, dans un mode de démarrage du dispositif à chambre de poussée (10), un mode de refroidissement en série selon la revendication 13 est exécuté et dans lequel, dans un mode de charge du dispositif à chambre de poussée (10), un mode de refroidissement en parallèle selon la revendication 13 est exécuté.

15. Procédé selon l'une des revendications 11 à 14, **caractérisé en ce que** le produit de refroidissement (52)
a) traverse le dispositif d'entraînement (100) avant ou après la traversée de la paroi de buse interne (24) et la paroi de buse externe (28),
et/ou
b) est injecté, après la traversée de la paroi de buse interne (24) et/ou la paroi de buse externe (28), à travers les premières entrées de combustible (110), dans la chambre de poussée (12).
